# EUROPEAN PATENT APPLICATION

(11) **EP 4 822 769 A1**
(43) Date of publication of application: **14.10.2026**
(21) Application number: 25777422.4
(22) Date of filing: 12.05.2025
(51) Int. Cl.: H01M 4/36, H01M 4/13, H01M 4/134

(54) **NEGATIVE ELECTRODE MATERIAL, NEGATIVE ELECTRODE SHEET AND SECONDARY BATTERY**

(30) Priority: 30.07.2024 CN 202411035149; 27.09.2024 CN 202411369551
(71) Applicant: BTR New Material Group Co., Ltd., Shenzhen, Guangdong 518106 (CN)
(72) Inventor: CHEN, Xi, Shenzhen, Guangdong 518106 (CN); PANG, Chunlei, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2025/094363
(87) International publication number: WO 2025/201570

(57) **Abstract**

The present application relates to the field of electrochemical energy storage. Disclosed are a negative electrode material, a negative electrode sheet and a secondary battery. The negative electrode material comprises a carbon substrate and an active substance, wherein the carbon substrate is provided with pores, and !he active substance is at least partially arranged inside the pores of the carbon substrate, with the deposition parameter r of the active substance being greater than or equal to 0.85. In formula (1), m1 is the mass of the negative electrode material; based on m1, the mass percentage of the active substance is al, and the specific pore volume of the negative electrode material is *p*₁; m2 is the mass of the negative electrode material after the active substance is removed; based on m2, the mass percentage of the active substance is a2, and the specific pore volume of the negative electrode material is *p*₂; and *p* is the density of the active substance. The secondary battery comprises the negative electrode material, and has a relatively high initial coulombic efficiency and good cycling stability. $γ = \frac{{m}_{2} \times {p}_{2} - {m}_{1} \times {p}_{1}}{\left({m}_{1}\times {a}_{1}-{m}_{2}\times {a}_{2}\right) / ρ}$ (1)

## Description

### CROSS-REFERENCE TO RELATED APPLICATIONS

The present application claims priority to Chinese Patent Application No. 202411035149.3, filed on July 30, 2024, and Chinese Patent Application No. 202411369551.5, filed on September 27, 2024. The entire content of the aforementioned Chinese patent applications are incorporated herein by reference in their enteritis.

### TECHNICAL FIELD

The present application relates to the field of electrochemical energy storage, and particularly to an anode material, an anode sheet, and a secondary battery.

### BACKGROUND

Due to their high energy density, long service life, and environmental friendliness, lithium-ion batteries are widely used in the 3C sector. Silicon material is one of the most promising anode materials for achieving high-capacity lithium-ion batteries; however, silicon material suffers from severe volume expansion during the charge and discharge process, leading to a rapid decline in battery capacity during long-term cycling.

To address such technical issues, silicon materials are often composited with porous carbon materials to mitigate the volume expansion of the silicon material. However, when the silicon content reaches a certain level, risks such as increased side reactions between the anode material and the electrolyte and increased gas generation may occur, thereby reducing the cycling performance and safety performance of the battery.

### SUMMARY

The present application provides an anode material, an anode sheet, and a secondary battery to solve at least one of the above problems.

To achieve the above object, the present application provides an anode material, which includes a carbon matrix and an active material. The carbon matrix is provided with pores, and the active material is at least partially disposed in the pores of the carbon matrix. A deposition parameter *γ* of the active material is greater than or equal to 0.85; $γ = \frac{{m}_{2} \times {p}_{2} - {m}_{1} \times {p}_{1}}{\left({m}_{1}\times {a}_{1}-{m}_{2}\times {a}_{2}\right) / ρ}$ , where *m*₁ is a mass of the anode material, a mass percentage of the active material is *a*₁ based on *m*₁, and a specific pore volume of the anode material is *p*₁; *m*₂ is a mass of the anode material with the active material removed, a mass percentage of the active material is *a*₂ based on *m*₂, a specific pore volume of the anode material with the active material removed is *p*₂; *ρ* is a density of the active material.

The present application further provides an anode sheet including the above-mentioned anode material.

The present application further provides a secondary battery including the above-mentioned anode material or the above-mentioned anode sheet.

The present application characterizes the proportion of the active material disposed within the pores of the carbon matrix, i.e., the deposition parameter *γ*, by measuring the changes in specific pore volume and mass of the anode material before and after removal of the active material. In the present application, the deposition parameter *γ* of the active material is greater than or equal to 0.85, allowing most of the active material to be attached within the pores of the carbon matrix. This can reduce side reactions between the anode material and the electrolyte during charging and discharging, improve the cycling performance of the battery, reduce the hydrolysis of the active material during pulping and battery usage (thereby reducing gas generation), and improve the safety performance of the battery. Additionally, with a constant silicon content, an increase in the silicon content within the pores of the carbon matrix can also improve the particle strength of the anode material.

### BRIEF DESCRIPTION OF DRAWINGS

FIG. 1 is a preparation flow chart of an anode material provided by the present application;
FIG. 2 is a scanning electron microscope (SEM) image of an anode material provided by Example 17 of the present application;
FIG. 3 is an XRD pattern of the anode material provided by Example 17 of the present application;
FIG. 4 is an initial charge-discharge curve of the anode material provided by Example 17 of the present application;
FIG. 5 is a comparison chart of the electrical conductivity of the anode material provided by Example 17 and an anode material provided by Comparative Example 9 of the present application.

### DESCRIPTION OF EMBODIMENTS

Embodiments of the present application are described in detail below. The following embodiments are illustrative and are only used to explain the present application, and should not be construed as a limitation of the present application. It should be noted that, unless otherwise defined, all technical and scientific terms used herein have the same meaning as commonly appreciated by those skilled in the technical field to which the present application belongs. In the absence of conflict, the embodiments of the present application and the features in the embodiments can be combined with each other. Many specific details are set forth in the following description to facilitate a full understanding of the present application; the described embodiments are only a part of the embodiments of the present application, rather than all of the embodiments.

An embodiment of the present application provides a secondary battery, including a shell, an electrode assembly, and an electrolyte. Both the electrode assembly and the electrolyte are located within the shell.

The shell may be a packaging bag obtained by packaging with a packaging film (such as an aluminum-plastic film), for example, the secondary battery is a soft-pack battery. In other embodiments, the secondary battery may also be, but is not limited to, a steel case battery, an aluminum case battery and the like.

The electrolyte may be one or more of gel, solid, and liquid states. In some embodiments, the liquid electrolyte includes a lithium salt and an organic solvent. The lithium salt may be selected from, but not limited to, one or more of lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium methanesulfonate (LiCH₃SO₃), lithium bis(fluorosulfonyl)imide (LiFSI), lithium bis(trifluoromethanesulfonyl)imide (LiTFSI), lithium trifluoromethanesulfonate (LiCF₃SO₃), lithium bis(trifluoromethylsulfonyl)imide (LiN(SO₂CF₃)₂, lithium tris(trifluoromethylsulfonyl)methide (LiC(SO₂CF₃)₃), lithium bis(oxalato)borate (LiBOB), and lithium difluorophosphate (LiPO₂F₂). For example, the lithium salt LiPF₆ is selected because it can provide high ionic conductivity and improve cycling characteristics. The organic solvent may be a carbonate compound, a carboxylate compound, an ether compound, a nitrile compound, other organic solvents, or a combination thereof. Examples of carbonate compounds include, but are not limited to, diethyl carbonate (DEC), dimethyl carbonate (DMC), dipropyl carbonate (DPC), methyl propyl carbonate (MPC), ethyl propyl carbonate (EPC), ethyl methyl carbonate (MEC), ethylene carbonate (EC), propylene carbonate (PC), butylene carbonate (BC), vinylene ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or a combination thereof.

The electrode assembly includes a cathode sheet, an anode sheet, and a separator, with the separator disposed between the cathode sheet and the anode sheet. The electrode assembly may be a stacked structure, which is formed by alternately stacking the cathode sheet, the separator, and the anode sheet in sequence. In other embodiments, the electrode assembly may also be a wound structure, which is formed by stacking the cathode sheet, the separator, and the anode sheet in sequence and then winding them.

### Cathode sheet

A cathode sheet includes a cathode current collector and a cathode active material layer disposed on at least one surface of the cathode current collector. The cathode current collector may use aluminum foil, nickel foil, or the like, or may be any composite current collector disclosed in the prior art, such as, but not limited to, a current collector formed by combining the aforementioned conductive foil and a polymer substrate. The cathode active material layer contains a cathode active material, and the cathode active material includes a compound that can reversibly intercalate and deintercalate lithium ions (i.e., a lithiated intercalation compound). In some embodiments, the cathode active material may include a lithium transition metal composite oxide. The lithium transition metal composite oxide contains lithium and at least one element selected from cobalt, manganese, and nickel. In some embodiments, the cathode active material may include, but is not limited to, at least one of lithium cobalt oxide (LiCoO₂), lithium nickel manganese cobalt ternary material (NCM), lithium manganese oxide (LiMn₂O₄), lithium nickel manganese oxide (LiNi_{0.5}Mn_{1.5}O₄) or lithium iron phosphate (LiFePO₄).

The cathode active material layer further includes a binder for binding the cathode active material particles to facilitate the formation of a film layer, while also improving the bonding force between the cathode active material layer and the cathode current collector. In some embodiments, the binder may include, but is not limited to, at least one of polyvinyl alcohol, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylic-esterified styrene-butadiene rubber, epoxy resin, or nylon.

The cathode active material layer may further include a conductive material, and the conductive material includes, but is not limited to, carbon-based materials, metal-based materials, conductive polymer, or any combination thereof. In some embodiments, the carbon-based materials may include, but are not limited to, natural graphite, artificial graphite, carbon black, acetylene black, Ketjen black, carbon fiber, or any combination thereof. In some embodiments, the metal-based materials may include, but are not limited to, metal powder or metal fibers, such as copper, nickel, aluminum, or silver. In some embodiments, the conductive polymer may be a polyphenylene derivative.

### Anode sheet

An anode sheet includes an anode current collector and an anode active material layer disposed on at least one surface of the anode current collector. The anode current collector may use at least one of copper foil, nickel foil, stainless steel foil, titanium foil, or carbon-based current collector, or it may be any composite current collector disclosed in the prior art, such as, but not limited to, a current collector formed by combining the aforementioned conductive foil with a polymer substrate. The anode active material layer includes an anode material, a binder, and a conductive material.

An anode material includes a carbon matrix and an active material; the carbon matrix is provided with pores, and the active material is at least partially disposed within the pores of the carbon matrix.

The carbon matrix has pores, which is conducive to providing more deposition sites for the active material, allowing the active material to be deposited at least within the pores of the carbon matrix. Meanwhile, the porous framework of the carbon matrix can form a conductive network, which facilitates electron transport during the charge and discharge process, thereby reducing the polarization of the battery material and improving electrical conductivity and cycle stability.

In the present application, the deposition parameter *γ* of the active material in the anode material is greater than or equal to 85%. The deposition parameter *γ* is obtained through Formula I, where Formula I is:
$γ = \frac{{m}_{2} \times {p}_{2} - {m}_{1} \times {p}_{1}}{\left({m}_{1}\times {a}_{1}-{m}_{2}\times {a}_{2}\right) / ρ} ;$
where *m*₁ is the mass of the anode material. Based on *m*₁, the mass percentage of the active material is *a*₁, and the specific pore volume of the anode material is *p*₁; *m*₂ is the mass of the anode material with the active material removed. Based on *m*₂, the mass percentage of the active material is *a*₂, and the specific pore volume of the anode material with the active material removed is *p*₂; *ρ* is the density of the active material.

In Formula I, the polynomial *m*₂ × *p*₂ - *m*₁ × *p*₁ represents the difference between the pore volume of the anode material after removal of the active material and the pore volume of the provided anode material, which is used to characterize the volume of the active material disposed within the pores of the carbon matrix in the provided anode material; the polynomial *m*₁ × *a*₁ - *m*₂ × *a*₂ represents the difference between the mass of the active material in the provided anode material and the mass of the active material in the anode material after removal of the active material, which is used to characterize the total mass of the active material removed by the acid solution (including all active material disposed within the carbon matrix pores and at other locations of the carbon matrix), and the ratio of the polynomial *m*₁ × *a*₁ - *m*₂ × *a*₂ to the density *ρ* of the active material corresponds to the total volume of the active material in the provided anode material. Therefore, Formula I as a whole is used to characterize the proportion of the active material disposed within the carbon matrix pores relative to the total active material in the anode material. In some embodiments, taking a silicon-based material as the active material as an example, *ρ* in Formula I may take a value of 2.34, with the unit being g/cm³, and the deposition parameter *γ* of the silicon-based material may be calculated through Formula I, which can further characterize the proportion of the silicon-based material deposited within the pores of the carbon matrix.

In related technologies, when the content of the silicon-based material reaches a certain level, some silicon-based material particles begin to adhere to the surface of the carbon matrix, thereby significantly increasing the specific surface area of the composite material, which leads to increased contact between the composite material and the electrolyte during charging and discharging, increased side reactions, and difficulty in maintaining a stable SEI film; furthermore, the silicon-based material particles adhering to the surface of the carbon matrix are prone to hydrolysis during slurry preparation and battery use, generating a large amount of gas, which leads to decreased slurry stability and battery safety hazards; in addition, with a constant content of the silicon-based material, a higher content of the silicon-based material on the surface of the carbon matrix means a lower content of the silicon-based material filled inside the carbon matrix, which may result in excess pores inside the particles, leading to the problem of decreased strength of the composite material particles.

The present application characterizes the proportion of active material deposited within the pores of the carbon matrix, i.e., the deposition parameter *γ*, by measuring the changes in specific pore volume and mass of the anode material before and after removal of the active material. In the present application, the active material deposition parameter *γ* is greater than or equal to 0.85, ensuring that most of the active material is attached within the pores of the carbon matrix. This reduces side reactions between the anode material and the electrolyte during charging and discharging, improves the cycling performance of the battery, reduces the hydrolysis of the active material during pulping and battery use (thereby reducing gas evolution), and enhances the safety performance of the battery. Additionally, with a constant content of active material such as silicon-based material, an increase in the content of active material such as silicon-based material within the pores of the carbon matrix can also increase the particle strength of the anode material. In other embodiments, when the deposition parameter *γ* is less than 0.85, the specific pore volume, specific surface area, volume proportion of micropores (pores with a pore size less than or equal to 2nm ), and gas evolution of the resulting anode material increase significantly, which is unfavorable for achieving good electrochemical performance. This further demonstrates that the present application has significant practical value in obtaining anode materials with relatively more active material disposed within the pores of the carbon matrix by setting the deposition parameter *γ* to be greater than or equal to 0.85.

Specifically, the parameter *γ* may be any value among 0.85, 0.91, 0.93, 0.94, 0.95, 0.96, 0.97, 0.98, 0.99 and the like., or any other value not lower than 0.85, which is not limited herein. When *γ* ≥ 0.85, it indicates that a relatively large amount of active material is deposited within the pores inside the matrix.

In some embodiments, "removal of the active material from the anode material" includes: mixing the anode material with an acid solution. Mixing the anode material with an acid solution of sufficient concentration and stirring thoroughly to etch the anode material with the acid solution can remove the active material within the pores and on the surface of the carbon matrix of the anode material to a certain extent. The etched anode material is then washed and dried to complete the removal of the active material. In some embodiments, the acid solution includes one or more of hydrochloric acid, nitric acid, and hydrofluoric acid.

In some embodiments, the distribution parameter M of the active material in the anode material is 0.015≤M≤5. Here, the distribution parameter M of the active material in the anode material is obtained through the following formula: M = σ/100×al; where, based on the mass of the anode material, the mass percentage of the active material in the anode material is al%, the electrical conductivity of the anode material is σ S/cm, with the limitation of 16 %≤a1≤65 %, and the final value of M is between 0.015 and 5.

For the anode material provided in the present application, 16 %≤a1≤65 %is defined, and the value of M is limited to be between 0.015 and 5. When the content of the active material is within this range, it can fully fill the pores in the carbon matrix. While improving the electrical conductivity of the anode material, it can also ensure other properties of the anode material, such as good cycling performance and initial coulombic efficiency. Finally, an anode material with excellent all-around performance is formed.

The anode material includes an appropriate amount of active material and possesses suitable electrical conductivity. It should be noted that, taking silicon material as an example, silicon material as a semiconductor has inherently poor conductivity, with an electrical conductivity of only about 10⁻⁷ S/cm. After being composited with a carbon matrix, if the content of the silicon-based material in the anode material is too high or it is distributed excessively on the surface of the carbon matrix, a thick electron layer will be formed, and the electrical conductivity of the anode material will decrease. When a1<16%, it indicates that the content of the silicon-based material in the anode material is too low, and a large number of pores are distributed within the carbon matrix, with some pores not being filled by the active material. Consequently, the specific surface area of the formed anode material is relatively large, increasing the contact area between the anode material and the electrolyte during the charge and discharge process of the battery prepared with the anode material, increasing side reactions between the anode material and the electrolyte, and causing the SEI film on the surface of the anode material to continuously thicken, thereby consuming excessive lithium salt. Moreover, the volume effect easily causes electrical detachment between particles, leading to a decrease in the reversible capacity and coulombic efficiency of the battery. When a1>65%, the proportion of active material in the anode material is too high, and some active material will begin to adhere to the surface of the carbon matrix, thereby significantly increasing the specific surface area of the anode material, leading to increased contact between the composite material and the electrolyte during the charge and discharge process, increased side reactions, and difficulty in maintaining a stable SEI film; furthermore, the silicon-based material particles adhering to the surface of the carbon matrix are prone to hydrolysis during pulping and battery use, generating a large amount of gas, thereby leading to decreased slurry stability and battery safety hazards.

Specifically, M may be any value among 0.015, 0.081, 0.16, 0.22, 0.36, 0.68, 1.24, 1.98, 2.25, 2.87, 3.33, 3.89, 4.41, 4.88, 5, or other values within 0.015-5, which is not limited herein. Therefore, it can be appreciated that when the value of M is within this range, it indicates that the anode material includes an appropriate amount of active material. At the same time, the deposition parameter γ is not lower than 0.85, meaning that a relatively large amount of active material is distributed in the pores within the carbon matrix. The two characteristics of M and *γ* satisfying the numerical ranges assist each other, allowing the active material to be deposited relatively abundantly and uniformly inside the matrix, building smooth electron channels within the pores of the carbon matrix, and improving the electrical conductivity of the anode material.

In some embodiments, the median particle size D50 of the anode material is 1 µm-15 µm, which may specifically be 1 µm, 1.8 µm, 3 µm, 5 µm, 7.5 µm, 8 µm, 8.8 µm, 9.2 µm, 10 µm, 12 µm, 15 µm and the like., or any other value within the aforementioned range, which is not limited herein. It can be appreciated that when the median particle size of the anode material is within the above range, it possesses better mechanical strength and higher specific surface area, which is conducive to the improvement of the cycling performance of the anode material.

In some embodiments, the particle size distribution of the anode material satisfies the following relationship: particle size distribution satisfies 0.1≤(D90-D10)/D50≤2. It may specifically be any value among 0.1, 0.3, 0.8, 1.4, 1.8, and 2, or any other value within the aforementioned range, which is not limited herein. When the particle size of the anode material is within the above range, particles of different sizes can cooperate with each other, and small particles may be used to fill the gaps between large particles, thereby increasing the tap density of the anode material.

It should be noted that the volume-based cumulative particle size distribution measured by the laser diffraction method is defined as follows: D10 represents the particle size corresponding to a cumulative particle size distribution percentage of 10%, D50 represents the particle size corresponding to a cumulative particle size distribution percentage of 50%, and D90 represents the particle size corresponding to a cumulative particle size distribution percentage of 90%.

In some embodiments, the volume proportion of micropores of the anode material is 10%-30%.

In some embodiments, the volume proportion of mesopores of the anode material is 30%-80%.

In some embodiments, the volume proportion of macropores in the anode material is 0-10%.

It can be appreciated that since the molecular size of the electrolyte is generally less than or equal to the pore size of the micropores, under the strong capillary adsorption capacity of the micropores, the adsorption capacity of the anode material is largely proportional to the pore volume of the micropores. For example, as the micropore volume increases, the adsorption capacity of the anode material increases, thereby increasing the side reactions between the anode material and the electrolyte. Therefore, controlling the volume ratio of micropores, mesopores, and macropores in the anode material within this range can improve the uniformity of the distribution of silicon material within the anode material. Specifically, the micropores are basically filled with the active material, and the remaining majority of the pores are mesopores, which can effectively alleviate the volume expansion of the active material and reduce the excessive local expansion stress caused by non-uniform volume changes of the active material during the cycling process of the anode material, thereby preventing the cracking and pulverization of the anode material.

In some embodiments, the specific surface area of the anode material is 0.1 m²/g-5 m²/g. Specifically, the value of the specific surface area may be any value among 0.1 m²/g, 0.8 m²/g, 1.4 m²/g, 1.8 m²/g, 2.5 m²/g, 3.2 m²/g, 4.1 m²/g, 4.8 m²/g and 5 m²/g, or other values within the aforementioned ranges. It can be appreciated that the specific surface area of the anode material affects the contact area between the anode material and the electrolyte. When the specific surface area of the anode material is within the above range, it can reduce the amount of lithium ions consumed by the SEI film formed during the initial charge and discharge process of the lithium-ion battery, thereby reducing the irreversible capacity loss of the lithium-ion battery.

In some embodiments, the carbon matrix is a porous carbon material, and the porous carbon material includes at least one of hard carbon, soft carbon, graphite, mesocarbon microbeads, activated carbon, carbon aerogel and the like.

In some embodiments, the active material includes one or more of silicon-based material, tin-based material, germanium-based material, and lead-based material. For example, using a silicon-based material as a component of the negative active material can increase the specific capacity of the anode material, thereby increasing the energy density of the secondary battery.

In some embodiments, the silicon-based material includes one or more of amorphous silicon, crystalline silicon, a composite of crystalline silicon and amorphous silicon, silicon oxide, and silicon alloy. For example, amorphous silicon expands isotropically during the lithium intercalation process, which can reduce pore collapse, inhibit the rapid decay of the specific capacity of the anode material, and is more conducive to improving the lithium intercalation cycling performance of the anode material.

In some embodiments, the active material includes a silicon material, and the silicon material includes at least one of crystalline silicon, silicon oxide, amorphous silicon, silicon alloy, and a mixture of crystalline and amorphous silicon. Specifically, the silicon alloy may be a silicon-lithium alloy, silicon-magnesium alloy and the like. Of course, in some cases, the silicon alloy includes elemental silicon particles and an alloy.

In some embodiments, the purity of the silicon material is greater than 99%. High-purity silicon material is conducive to Li-Si alloying with lithium, improving the cycling performance of the lithium-ion battery.

In some embodiments, the average particle size of the silicon material is 1 nm-500 nm. Specifically, the average particle size of the silicon material may be any value among 1nm, 150nm, 210nm, 340nm, 400nm, 470nm, and 500nm, or other values within the aforementioned ranges, which may be selected according to actual needs. The mechanical stress of the silicon material during expansion decreases as the particle size decreases, allowing the secondary battery to maintain better battery capacity and reducing irreversible capacity loss. Furthermore, a reduced size can shorten the electron and ion transport paths. At the same time, when the particle size of the silicon material decreases, the voids between adjacent silicon materials increase, which can reserve space for expansion. Preferably, the average particle size of the silicon material is 1 nm-50 nm, and more preferably, the average particle size of the silicon material is 1 nm-10 nm.

In some embodiments, when the active material is a silicon-based material, the aforementioned "anode material with the active material removed" includes: preparing an acid solution by mixing nitric acid with a concentration of 70% and hydrofluoric with a concentration of 50% in a volume ratio of 2:1, placing the anode material into a sufficient amount of the acid solution and stirring for at least 10 hours, subjecting the resulting slurry to solid-liquid separation to collect a solid product, alternately washing the solid product with deionized water and anhydrous ethanol for 3 to 5 times until a pH value of the filtrate is neutral, and drying the washed product in a vacuum drying oven at 60 °C to 120 °C for 6 h to 12 h.

In some embodiments, the morphology of the active material includes one or more of dot-like, spherical, ellipsoidal, and flake-like shapes. The morphology of the silicon material may be selected according to actual needs and is not limited herein.

In some embodiments, the purity of the active material is greater than 99%. Taking a silicon-based material as the active material as an example, a high-purity silicon-based material is more conducive to Li-Si alloying with lithium, thereby improving the cycling performance of the lithium-ion battery.

In some embodiments, the average particle size of the active material (such as a silicon-based material) is 0.1 nm-50 nm. For example, the average particle size of the active material may be 0.1 nm, 0.5 nm, 1 nm, 3 nm, 5 nm, 8 nm, 10 nm, 20 nm, 30 nm, 40 nm, 50 nm, or any value within a range defined by any two of the aforementioned values. By setting the average particle size of the active material, the mechanical stress during volume expansion of the active material can be reduced, allowing the secondary battery to maintain good battery capacity and reducing irreversible capacity loss. It can also shorten the electron and ion transport paths, and at the same time, the reduced size of the active material increases the voids between adjacent active materials, which can reserve space for the volume expansion of the active material.

In some embodiments, the average particle size of the active material is further preferably 0.1 nm-5 nm. For example, the average particle size of the active material may be 0.1 nm, 0.3nm, 0.5 nm, 0.8 nm, 1 nm, 2nm, 3 nm, 4 nm, 5 nm, or any value within a range defined by any two of the aforementioned values.

In some embodiments, the carbon matrix includes one or more of artificial graphite, natural graphite, amorphous carbon, activated carbon, mesocarbon microbeads, carbon nanotubes, carbon nanofibers, and graphene. Selecting the aforementioned materials for the carbon matrix can serve to provide pore distribution sites for the active material and form a conductive network.

In some embodiments, the pores of the carbon matrix include micropores, and the volume proportion of the micropores in the pores of the carbon matrix is greater than or equal to 70%, with the pore size of the micropores being less than 2 nm. Preferably the volume proportion is ≥80%, and more preferably ≥90%. For example, the volume proportion of the micropores of the carbon matrix may be 70%, 75%, 80%, 85%, 90%, 95%, 99%, 99%, or any value within a range defined by any two of the aforementioned values. Controlling the micropore fraction of the carbon matrix within the above range can reduce the aggregation of the active material on the surface of the carbon matrix, improve the content of the active material in the carbon matrix and the uniformity of the active material distribution, and thereby improve the specific capacity and mechanical properties of the anode material. It can be appreciated that the pores of the carbon matrix are mainly micropores, which is conducive to the deposition of the active material, such as silicon material, in the micropores inside the carbon matrix; in addition, a high volume proportion of the micropores results in higher cycling performance and initial coulombic efficiency of the final battery.

In some embodiments, the average pore size of the carbon matrix is 0.1 nm-5 nm, preferably 0.1 nm to 2 nm, and more preferably 0.1 nm to 1.8 nm. Specifically, it may be any value among 0.1 nm, 0.4 nm, 0.8 nm, 1.8 nm, 2 nm, 2.5 nm, 3.4 nm, 4.5 nm and 5 nm, or other values within the above ranges, which is not limited herein. The pore size distribution within this range facilitates the deposition of the active material during the deposition process, thereby improving the compactness of the anode material.

In some embodiments, based on the mass of the carbon matrix, the specific pore volume of the carbon matrix is 0.3 cm³/g to 2 cm³/g. For example, the specific pore volume of the carbon matrix may be 0.3 cm³/g, 0.5 cm³/g, 0.8 cm³/g, 1 cm³/g, 1.5 cm³/g, 1.8 cm³/g, 2 cm³/g, or any value within a range defined by any two of the aforementioned values. When the carbon matrix has abundant pores, these pores can accommodate the active material and reserve space for the volume expansion of the active material.

In some embodiments, the specific pore volume of the carbon matrix is 0.5 cm³/g-1.4 cm³/g. For example, the specific pore volume may be 0.5 cm³/g, 0.8 cm³/g, 1 cm³/g, 1.2 cm³/g, 1.4 cm³/g, or any value within a range defined by any two of the aforementioned values.

In some embodiments, based on the mass of the carbon matrix, the pore volume of the carbon matrix is ≥0.4 cm³/g, preferably ≥0.5cm³/g, and more preferably ≥0.7 cm³/g. Specifically, it may be any value among 0.4 cm³/g, 0.5 cm³/g, 0.6 cm³/g, 0.7cm³/g, 0.8 cm³/g, 0.9 cm³/g or other values within the aforementioned range, which is not limited herein. It can be appreciated that when the carbon matrix has abundant pores, these pores can accommodate the active material and reserve space for the volume expansion of the active material. Furthermore, the higher the pore volume of the carbon matrix, the more active material it can accommodate internally, allowing more active material to be deposited inside the carbon matrix, thereby improving the electrical conductivity and cycling performance of the anode material.

In the present application, the total pore volume of the carbon matrix refers to the total pore volume of the anode material after removal of the silicon-based active material. The method for removing the silicon-based active material from the anode material includes: taking 16 g of the anode material and adding it to 400 mL of an HF aqueous solution with a mass concentration of 20%, and stirring and reacting for 6 h; adding another 400 mL of an HF aqueous solution with a mass concentration of 20%, and stirring and reacting for 24 h; subjecting to centrifugation, and adding the solid obtained by centrifugation to 1000 mL of an HF aqueous solution with a mass concentration of 20%, and stirring and reacting for 24 h; subjecting to centrifugation, washing with pure water until neutral, and drying the solid obtained by centrifugation to obtain the carbon matrix.

In some embodiments, the average particle size of the carbon matrix is 1 µm-50 µm, which can specifically be any value among 1 µm, 8 µm, 12 µm, 25 µm, 32 µm, 43 µm and 50 µm, or other values within the aforementioned range. A test method for the average particle size of the carbon matrix includes: sample preparation: taking 1 g of the anode material after removal of the silicon-based active material, adding it to 20 mL of anhydrous ethanol, and subjecting to ultrasonic dispersion at a power of 250 W for 5 minutes until the particles are uniformly dispersed; taking 1-2 drops of the dispersion onto a copper grid, and naturally drying or vacuum drying at 40°C to 60°C for 10 minutes to 15 minutes, so that the anode material particles have no obvious agglomeration or overlapping; observing the carbon matrix in the anode material by a field emission scanning electron microscope, using a minimum circumscribed circle diameter of a single carbon matrix particle as the particle size of the particle, randomly measuring the particle sizes of 30 carbon matrix particles, and taking an average value of the particle sizes as the final average particle size of the carbon matrix.

In some embodiments, based on the mass of the anode material, the mass percentage of the carbon element is 30%-75%. Specifically, the mass percentage of the carbon element may be any value among 30%, 38%, 45%, 51%, 60%, 70%, 75%, or other values within the aforementioned range.

In some embodiments, the total pore volume of the anode material is less than the total pore volume of the carbon matrix. In the present application, the total pore volume of the anode material is significantly reduced compared to that of the carbon matrix because the active material may be relatively uniformly filled into the internal pores of the porous framework of the carbon matrix, causing the pore volume of most pores in the carbon matrix to decrease after being filled with the active material. This indicates that the pores of the carbon matrix are effectively and relatively uniformly filled by the active material, thereby increasing the specific capacity of the anode material.

In some embodiments, the specific pore volume of the anode material is 0.001 cm³/g to 0.1 cm³/g. For example, the specific pore volume of the anode material may be 0.001 cm³/g, 0.003 cm³/g, 0.005 cm³/g, 0.008 cm³/g, 0.01 cm³/g, 0.03 cm³/g, 0.05 cm³/g, 0.08 cm³/g, 0.1 cm³/g, or any value within a range defined by any two of the aforementioned values. After the active material is filled into the pores of the carbon matrix, the remaining pores in the carbon matrix can reserve space for the volume expansion of the active material, alleviate the expansion effect of the anode material, and improve the cycle stability of the anode material. The remaining pores in the carbon matrix can also adsorb or accommodate a small amount of gas generated by the reaction of the active material with the electrolyte or during slurry preparation, improving the gas generation phenomenon of the anode material.

In some embodiments, the average pore size of the anode material is 0.45 nm to 50 nm. For example, the average pore size of the anode material may be 0.45 nm, 0.65 nm, 0.85 nm, 1 nm, 3 nm, 5 nm, 8 nm, 10 nm, 20 nm, 30 nm, 40 nm, 50 nm, or any value within a range defined by any two of the aforementioned values. The distribution of the active material in the pores of the carbon matrix affects the specific pore volume and average pore size of the anode material. For example, if more active material adheres to the surface of the carbon matrix, it will cause the pore volume of the anode material to be relatively large and the average pore size to decrease slightly. Controlling the average pore size of the pores in the anode material to facilitate the passage of lithium ions through the pores of the anode material not only improves the charge-discharge rate performance of the anode material but also helps to buffer the volume expansion of the active material and improve the structural stability of the anode material. In this embodiment, most of the active material is distributed within the pores of the carbon matrix, so the average pore size of the formed anode material will increase.

In some embodiments, the pores of the anode material include micropores, the volume proportion of the micropores in the pores of the anode material is less than or equal to 10%, and the pore size of the micropores is less than or equal to 2 nm. For example, the volume proportion of the micropores of the anode material may be 1%, 2%, 3%, 4%, 5%, 6%, 7%, 8%, 9%, 10%, or any value within a range defined by any two of the aforementioned values. In some preferred embodiments, the volume proportion of the micropores of the anode material is 1%-9%.

In some embodiments, the pores of the anode material include mesopores, the volume proportion of the mesopores in the pores of the anode material is greater than or equal to 80%, and the pore size of the mesopores is greater than 2 nm and less than or equal to 50 nm. For example, the volume proportion of the mesopores of the anode material may be 80%, 85%, 90%, 95%, 96%, 97%, 98%, 99%, or any value within a range defined by any two of the aforementioned values. In some preferred embodiments, the volume proportion of the mesopores of the anode material is 85%-94%.

In some embodiments, the pores of the anode material include macropores, the volume proportion of the macropores in the pores of the anode material is less than or equal to 20%, and the pore size of the macropores is greater than 50 nm. For example, the volume proportion of the macropores of the anode material may be 1%, 3%, 5%, 8%, 10%, 13%, 15%, 18%, 20%, or any value within a range defined by any two of the aforementioned values. In some preferred embodiments, the volume proportion of the macropores of the anode material is 1%-14%.

Since the molecular size of the electrolyte is generally less than or equal to the pore size of the micropores, under the strong capillary adsorption of the micropores, the adsorption capacity of the anode material is largely proportional to the pore volume of the micropores. For example, as the micropore volume increases, the adsorption capacity of the anode material increases, which in turn increases the side reactions between the anode material and the electrolyte. Therefore, controlling the pore volume ratio of the micropores in the anode material can reduce the reaction sites for side reactions between the anode material and the electrolyte, thereby reducing the thickening of the solid electrolyte interphase (SEI) film caused by the continuous intrusion of the electrolyte, which is conducive to improving the cycling performance of the anode material. In addition, the distribution of pores is also closely related to the deposition of the active material. For example, if the active material is deposited within the pores of the carbon matrix, the volume proportion of micropores in the material will be relatively small; however, if the active material is deposited on the surface of the carbon matrix, a good pore-sealing effect (especially for micropores) cannot be achieved, which will increase the volume ratio of micropores in the material. The mesopores with an increased volume ratio can reserve sufficient buffer space for the volume expansion of the active material, effectively alleviating the volume expansion of the active material and reducing the risk of anode material rupture and pulverization caused by excessive local expansion stress due to uneven volume changes of the active material during cycling, which is conducive to improving the particle structure stability and cycle stability of the anode material. Macropores with a smaller volume and area ratio (i.e., a small number and low volume ratio of macropores) can increase the tap density and compaction density of the anode material, reduce problems such as breakage and cracks during the rolling process of the anode material into electrode plates, and improve the processing performance of the anode material. Controlling the volume ratios of micropores, mesopores, and macropores in the anode material within the above ranges is conducive to improving the distribution uniformity of the active material within the anode material.

In some embodiments, the specific surface area of the anode material is 0.5 m²/g-10 m²/g. For example, the specific surface area of the anode material may be 0.5 m²/g, 1 m²/g, 2 m²/g, 3 m²/g, 4 m²/g, 5 m²/g, 6 m²/g, 7 m²/g, 8 m²/g, 9 m²/g, 10 m²/g, or any value within a range defined by any two of the aforementioned values. When the specific surface area of the anode material is large, the SEI film consumes excessive lithium salt, and the volume effect easily causes electrical disconnection between particles, leading to a decrease in the reversible capacity and coulombic efficiency of the battery. Therefore, the specific surface area in this embodiment is small, which can effectively improve the initial discharge specific capacity and initial coulombic efficiency of the battery.

In some embodiments, the particle size D50 of the anode material is 5 µm-20 µm. For example, the particle size D50 of the anode material may be 5 µm, 8 µm, 10 µm, 13 µm, 15 µm, 18 µm, 20 µm, or any value within a range defined by any two of the aforementioned values. When the D50 of the anode material is within the above range, it is conducive to the improvement of the cycling performance of the anode material. In some embodiments, the particle size distribution (D90-D10)/D50 of the anode material of the present application is 0.9 to 5. For example, the particle size distribution (D90-D10)/D50 of the anode material may be 0.9, 1, 1.2, 1.5, 2, 2.6, 3, 3.5, 4, 4.3, 4.6, 4.8, 5, or any value within a range defined by any two of the aforementioned values.

In some embodiments, the compaction density of the anode material under 1 T pressure is 0.8 g/cm³-1.3 g/cm^{3.} For example, the compaction density of the anode material of the present application under 1T pressure may be 0.8 g/cm³, 0.9 g/cm³, 1.0 g/cm³, 1.1 g/cm³, 1.2 g/cm³, 1.3 g/cm³, or any value within a range defined by any two of the aforementioned values. Controlling the compaction density within the above range helps to reduce the diffusion path of lithium ions in the anode material, thereby improving the rate performance of the battery.

In some embodiments, the tap density of the anode material after 3000 vibrations is 0.5 g/cm³-1.5 g/cm³. For example, the tap density may be 0.5 g/cm³, 0.7 g/cm³, 0.9 g/cm³, 1.1 g/cm³, 1.3 g/cm³, 1.5 g/cm³, or any value within a range defined by any two of the aforementioned values. Controlling the tap density within the above range is conducive to forming a suitable degree of compactness in the internal structure of the anode material, thereby improving lithium ion transport and electron conduction, increasing battery energy density, extending cycle life, and improving safety performance.

In some embodiments, the powder electrical conductivity of the anode material under a 20 kN pressure is 0.5 S/cm-2 S/cm. For example, the powder electrical conductivity of the anode material may be 0.5 S/cm, 0.7 S/cm, 0.9 S/cm, 1.1 S/cm, 1.3 S/cm, 1.5 S/cm, 1.7 S/cm, 1.9 S/cm, 2.0 S/cm, or any value within a range defined by any two of the aforementioned values.

In some embodiments, the 7-day average gas evolution of the anode material at 25 °C temperature is less than or equal to 1 mL/g. For example, the 7-day average gas evolution of the anode material at 25 °C temperature may be 0.1 mL/g, 0.3 mL/g, 0.5 mL/g, 0.7 mL/g, 0.9 mL/g, 1.0 mL/g, or any value within a range defined by any two of the aforementioned values. Controlling the gas evolution of the anode material within the above range indicates that most of the active material can be relatively uniformly distributed within the pores of the carbon matrix, reducing the direct contact between the active material and the electrolyte, thereby reducing side reactions between the dissolved active material and the electrolyte or slurry (such as silicon hydrolysis into silicate and hydrogen gas), and effectively reducing the gas evolution of the anode material.

In some embodiments, the 24h average gas evolution of the anode material at 25°C temperature is less than 0.15 mL/g. For example, the 24h average gas evolution of the anode material at 25°C temperature may be 0.052 mL/g, 0.07 mL/g, 0.09 mL/g, 0.1 mL/g, 0.11 mL/g, 0.13 mL/g, or any value within a range defined by any two of the aforementioned values. Controlling the gas evolution of the anode material within the above range indicates that most of the active material can be relatively uniformly distributed within the pores of the carbon matrix, reducing the direct contact between the active material and the electrolyte, thereby reducing side reactions between the dissolved active material and the electrolyte or slurry (such as silicon hydrolysis into silicate and hydrogen gas), and effectively reducing the gas evolution of the anode material.

In some embodiments, based on the mass of the anode material, the mass percentage of the carbon element in the anode material is 40% to 60%. Wherein, the carbon element includes the carbon matrix and the coating layer. When the mass percentage of the carbon element is within this range, a sufficient carbon-based substrate can be established to provide sufficient distribution sites for the active material, which is conducive to forming an effective conductive network, thereby improving the electrical conductivity and cycle stability of the anode material.

In some embodiments, based on the mass of the anode material, the mass percentage of the silicon element in the anode material is 37% to 55%. When the mass percentage of the silicon element is within this range, the resulting lithium battery can store a higher amount of electricity, that is, it has a higher initial discharge specific capacity.

In some embodiments, the anode material further includes a coating layer, which is disposed on at least part of the surface of the carbon matrix. The coating layer includes a carbon material, and the carbon material includes one or more of graphene, soft carbon, and hard carbon. On one hand, the coating layer located on the outer layer of the anode material has good electrical conductivity, which can improve the electrical conductivity of the anode material; on the other hand, it can coat the active material exposed on the surface of the carbon matrix, reduce the continuous oxidation of the exposed active material during storage, and reduce the decrease in the specific capacity and initial coulombic efficiency (ICE) of the anode material; the coating layer can also reduce the direct contact between the active material and the electrolyte, improve the stability of the SEI film, and thereby improve the initial coulombic efficiency of the anode material.

In some embodiments, the coating layer may be a single-layer coating formed of the above-mentioned single material, a coating layer formed of a combination of the above-mentioned multiple materials, a multi-layer coating formed of a single material, or a multi-layer coating formed of multiple materials and the like, and the layer structure of the coating layer may be selected according to actual needs. It can be appreciated that when the coating layer is a multi-layer coating structure, the density is higher.

In some embodiments, the thickness of the coating layer is 1 nm-300 nm. For example, the thickness of the coating layer may be 1 nm, 30 nm, 50 nm, 150 nm, 200 nm, 250 nm, 300 nm, or any value within a range defined by any two of the above values. The coating layer can reduce the solubility of the anode material, thereby reducing the gas evolution caused by the reaction between the dissolved active material and the electrolyte. Controlling the thickness of the coating layer within the above range is conducive to maintaining the stability of the particle structure of the anode material during the cycling process, can reduce the exposed active material on the surface of the anode material, reduce the large amount of SEI generated during charging and discharging caused by the exposed active material, and improve the specific capacity and electrochemical performance of the anode material.

In some embodiments, the thickness of the coating layer is preferably 1 nm-50 nm, and more preferably, the thickness of the coating layer is 1 nm-30 nm. This is conducive to the rapid and reversible intercalation and deintercalation of lithium ions.

In some embodiments, the mass percentage of the coating layer in the anode material is less than or equal to 10%. For example, the mass percentage of the coating layer in the anode material may be 10%, 9%, 8%, 7%, 6%, 5%, 4%, 3%, 2%, 1%, or any value within a range formed by any two of the aforementioned values. The coating layer can reduce the solubility of the anode material, thereby reducing the gas evolution caused by the reaction between the dissolved active material and the electrolyte. When the mass percentage of the coating layer in the anode material is within the above range, the lithium intercalation capacity of the anode material can be ensured, thereby ensuring the charge-discharge capacity of the lithium-ion battery prepared from the anode material.

The anode active layer further includes a binder for binding the anode material particles to facilitate the formation of a film layer, and it can also improve the bonding force between the anode active layer and the anode current collector.

In some embodiments, the binder may include, but is not limited to, polyvinyl alcohol, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, sodium carboxymethyl cellulose, sodium alginate, sodium polyacrylate, styrene-butadiene rubber, acrylic (ester) styrene-butadiene rubber, epoxy resin, or nylon and the like.

The separator includes a film layer with a porous structure, and its material includes, but is not limited to, at least one of polyethylene, polypropylene, polyvinylidene fluoride, polyethylene terephthalate, polyimide, or aramid. For example, the separator may be a polypropylene porous film, a polyethylene porous film, a polypropylene non-woven fabric, a polyethylene non-woven fabric, or a polypropylene-polyethylene-polypropylene porous composite film and the like.

The above-mentioned battery is applied to an electronic device to supply power to other electronic components in the electronic device. The use of the lithium-ion battery of the present application is not particularly limited, and it may be used in any electronic device known in the prior art. In some embodiments, the lithium-ion battery of the present application may be used for, but is not limited to, notebook computers, pen-input computers, mobile computers, e-book players, portable phones, portable fax machines, portable copiers, portable printers, stereo headsets, video recorders, LCD TVs, portable cleaners, portable CD players, mini-discs, transceivers, electronic organizers, calculators, memory cards, portable recorders, radios, backup power supplies, motors, automobiles, motorcycles, power-assisted bicycles, bicycles, lighting appliances, toys, game consoles, clocks, power tools, flashlights, cameras, large-scale household storage batteries, and lithium-ion capacitors and the like.

Another embodiment of the present application provides a preparation method for an anode material, including:
Step 1: a carbon matrix, zinc salt, and organic surfactant are mixed. The organic surfactant includes one or more of polyvinyl alcohol (PVA), polyvinylpyrrolidone (PVP), and Poloxamer (Pluronic F127), and heat in a reducing gas atmosphere to reduce the zinc ions in the zinc salt and attach them to the carbon matrix to obtain a first precursor.

The carbon matrix has pores, and the reduced zinc ions may be attached to the surface of the carbon matrix as well as in the pores of the carbon matrix; the organic surfactant can act to promote the deposition of the zinc salt on the carbon matrix. The first precursor is a carbon matrix precursor with metallic zinc attached both inside the pores and on the surface. The organic surfactant has amino and hydroxyl groups and may be a non-ionic surfactant or an anionic surfactant, which can promote the attachment and reduction of the zinc salt on the surface and in the pores of the carbon matrix.

In some embodiments, the zinc salt includes one or more of zinc chloride, zinc nitrate, zinc acetate, and zinc sulfate.

In some embodiments, the reducing gas includes hydrogen. It can be appreciated that the reducing gas atmosphere may further contain an inert gas; for example, the reducing gas atmosphere may be hydrogen, a mixed gas of hydrogen and helium, a mixed gas of hydrogen and nitrogen and the like.

In some embodiments, the heating temperature is 600°C to 800°C, and the heating time is 2 h-6 h.

Step 2: the first precursor is mixed with an acid solution. The concentration of the acid solution is 0.5 mol/L to 2 mol/L, to dissolve and remove the zinc attached to the surface of the carbon matrix, with a dissolution time of 1 h to 20 h, to obtain a second precursor.

The acid solution can act on the elemental zinc attached to the surface of the carbon matrix, while also reducing the reaction between the elemental zinc within the pores of the carbon matrix and the acid solution, thereby obtaining a carbon matrix precursor with elemental zinc attached within the pores, i.e., the second precursor. By controlling the concentration of the acid solution and the dissolution time within the above ranges, the zinc element on the surface of the carbon matrix precursor can be cleaned and removed while minimizing the reaction between the zinc element within the pores of the carbon matrix precursor and the acid solution.

In some embodiments, the acid solution includes one or two of hydrochloric acid, sulfuric acid, nitric acid, and phosphoric acid.

Step 3: the second precursor is mixed with an active material precursor and chemical vapor deposition is performed to deposit the active material into the pores of the carbon matrix, obtaining an anode material.

During the chemical vapor deposition process, under the catalytic action of elemental zinc, the active material is deposited into the pores of the carbon matrix, so that the active material in the prepared anode material is mainly distributed within the pores of the carbon matrix, thereby reducing the reaction between the active material attached to or dissolved from the surface of the anode material and the electrolyte, effectively reducing the gas generation value of the anode material and improving the powder electrical conductivity of the anode material, thereby improving the various performances of the battery prepared from the anode material.

In some embodiments, the active material precursor includes a silicon-containing gas, and the silicon-containing gas includes one or more of silane, disilane, trisilane, and tetrasilane.

In some embodiments, the concentration of the silicon-containing gas is 10% to 80%. Further, the gas used to dilute the silicon-containing gas may be selected from one or two of inert gas and hydrogen.

In some embodiments, the temperature of chemical vapor deposition is 400 °C to 600 °C, for example, the temperature of chemical vapor deposition may be 400 °C, 420 °C, 450 °C, 470 °C, 490 °C, 500 °C, 530 °C, 550 °C, 580 °C, 600 °C, or any value within a range defined by any two of the aforementioned values.

In some embodiments, the time of chemical vapor deposition is 1 h to 20 h. For example, the time of chemical vapor deposition may be 1 h, 2 h, 5 h, 8 h, 10 h, 15 h, 18 h, 20 h, or any value within a range defined by any two of the aforementioned values.

The process conditions of chemical vapor deposition (such as deposition temperature and deposition time) will affect the deposition of silicon particles within the pores of the carbon material. Controlling the temperature and time of chemical vapor deposition within the above ranges can ensure that the reaction gas does not decompose and deposit before entering the pores of the carbon material, but decomposes and deposits rapidly after entering the pores.

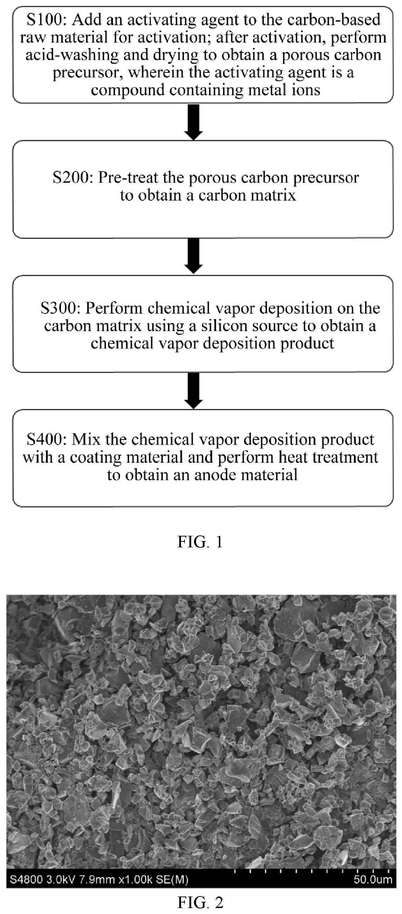

As shown in FIG. 1, the present application introduces a preparation method for an anode material in conjunction with embodiments, which includes the following steps:
S100: an activating agent is added to ta carbon-based raw material for activation, and after activation is completed, acid-washing is performed to obtain a carbon-based precursor, and the carbon-based precursor is dried to obtain a porous carbon precursor, where the activating agent is a compound containing metal ions.

In some embodiments, the activating agent includes at least one of potassium ferrate, nickel nitrate, ferric chloride, ferric nitrate, cobalt nitrate, nickel chloride, cobalt chloride, ferric bromide, cobalt bromide, nickel bromide, ferric carbonate, cobalt carbonate, nickel carbonate and the like., and the addition amount of the activating agent is 0.2%-5% of the mass of the carbon-based raw material. The above-mentioned activating agent has strong activation ability and can form more and uniformly distributed micropores in the porous carbon precursor, with the volume proportion of micropores being no less than 70%, which is conducive to the subsequent filling of the active material into the micropores of the porous carbon precursor. If the addition amount of the activating agent exceeds 5%, it will lead to larger pore sizes and a larger number of pores in the pore structure of the porous carbon precursor, which easily causes the structure of the anode material to collapse during the deintercalation process, leading to a decrease in the cycling performance of the anode material. At the same time, the volume proportion of micropores in the porous carbon precursor decreases, and the content of metal impurities becomes too high, which easily affects other properties of the anode material, such as reducing the initial coulombic efficiency. If the addition amount of the activating agent is too small, it is impossible to form a suitable number and uniform distribution of activation pores inside the porous carbon precursor, which is unfavorable for the subsequent deposition of silicon material in the pores of the porous carbon precursor, causing a large amount of silicon material to deposit on the surface of the porous carbon precursor, making the anode material have a large volume expansion; in addition, the silicon material deposited on the surface of the porous carbon precursor has an increased contact area with the electrolyte, making it easier to contact the electrolyte, increasing the thickness of the SEI film on the surface of the anode material, increasing the diffusion distance of lithium ions, hindering the smooth deintercalation of lithium ions, and ultimately causing the capacity loss of the anode material. Furthermore, because the silicon material cannot be deposited inside the porous carbon precursor, the M value and the deposition coefficient *γ* of the anode material are both outside the preset ranges of the present application, and the electrical conductivity of the formed anode material is far lower than 1S/cm.

In some embodiments, the activation temperature is 500-1200°C, and the activation time is 0.5 h-20 h.

At this activation temperature and duration, the activating agent embeds into the internal structure of the carbon-based raw material, undergoing cross-linking or polycondensation reactions with the carbon atoms and heteroatoms within the carbon-based raw material, volatilizing and removing non-carbon atoms N and H, causing some carbon atoms to be etched away, resulting in the formation of pores at the etched locations, with the formed pores having a small average pore size and high pore volume, which helps accommodate more silicon material and allows the silicon material to deposit within the pores.

In some embodiments, the carbon-based material includes, but is not limited to, at least one of bamboo charcoal, coconut shell, graphite, peanut shell, fruit shell, and resin. When the carbon-based raw material is a hard carbon-based raw material with an amorphous structure such as coconut shell, bamboo charcoal, peanut shell, or fruit shell, it needs to be carbonized first, whereas for formed raw materials such as graphite, it only needs to be directly mixed with the activating agent for activation. It should be noted that the carbon inside carbon-based materials with an amorphous structure is in an amorphous state, so the cost is lower, and the corresponding electrical conductivity is also lower, generally at 1-100 S/cm, while graphite, as a layered crystal structure, has higher electrical conductivity but higher processing costs; therefore, in practical use, carbon-based raw materials with an amorphous structure are generally adopted. Pre-treating the carbon-based raw material enables the active material to be uniformly deposited inside, thereby improving the electrical conductivity of the formed anode material and compensating for the low electrical conductivity of the active material itself.

In some embodiments, hydrochloric acid is used to acid-wash the activated carbon-based raw material, wherein the concentration of the hydrochloric acid is 12%-25%, and the acid-washing time is 5 h-6 h, to obtain a carbon-based precursor; the acid-washed carbon-based precursor is then dried to obtain a porous carbon precursor.

Hydrochloric acid cleaning is used to remove metal impurities in the carbon-based raw material as well as impurities in the carbon-based material itself, thereby opening the pore structure of the carbon-based raw material and increasing the specific surface area and micropore size of the porous carbon precursor.

S200: the porous carbon precursor is pre-treated to obtain a carbon matrix.

The specific operation of the pre-treatment is: mixing the porous carbon precursor with a catalyst containing metal ions and an organic surfactant in an aqueous solution and drying, then heating and reducing in a reducing atmosphere to obtain a carbon material with metal elements attached, and finally dispersing the carbon material in an acid solution to dissolve and remove the metal element particles on the surface of the carbon material to obtain the carbon matrix.

In some embodiments, the catalyst containing metal ions is specifically a catalyst containing zinc ions, and the compound may be one or a mixture of more of zinc chloride, zinc nitrate, zinc acetate, and zinc sulfate.

In some embodiments, the organic active agent is at least one of polyoxyethylene-polyoxypropylene ether block copolymer (Pluronic F127), polyvinyl alcohol (PVA), and polyvinylpyrrolidone (PVP).

In some embodiments, the reducing atmosphere is at least one of a mixed gas such as hydrogen, helium, nitrogen and the like.

In some embodiments, the acid solution is at least one of dilute hydrochloric acid and dilute nitric acid, and the cleaning time of the acid solution is 1-12 h, with a concentration of 0.5-1 mol/L. The acid solution cleaning is used to remove the elemental zinc attached to the surface of the carbon material, while also reducing the reaction between the elemental zinc inside the carbon material particles and the acid solution, thereby obtaining a carbon matrix with elemental zinc attached inside the particles.

S300: chemical vapor deposition is performed on the carbon matrix using a silicon source to obtain a chemical vapor deposition product.

In some embodiments, the silicon source includes at least one of monosilane, disilane, hexasilane, and trisilane. By performing chemical vapor deposition on the aforementioned carbon matrix with attached elemental zinc using the silicon source, the elemental zinc catalyzes the deposition of silicon material inside the particles of the carbon matrix. In the prepared anode material, the silicon material is mainly distributed inside the particles of the carbon matrix, which can facilitate electron transport channels and improve the powder electrical conductivity of the anode material.

In some embodiments, the deposition conditions for silicon deposition are: the set environmental vacuum pressure is p Pa, the silane gas concentration is N%, the flow rate is V L/min, satisfying α= N*V2/p, and the value of *α* is: 0.1≤α≤50.

By regulating the environmental vacuum pressure, silane gas concentration, and gas flow rate during chemical vapor deposition, uniform deposition of silicon inside the carbon matrix is achieved. Specifically, the silicon source is deposited into silicon material dispersed in the pores of the porous carbon matrix. The resulting anode material has uniform components and a relatively dense structure, and the voids inside the porous carbon matrix are used to buffer volume expansion; therefore, the formed anode material has a low expansion rate and excellent cycling performance. In addition, the carbon matrix framework not only has low production costs but also possesses excellent lithium storage capacity itself. Coupled with the low density and light weight of the carbon matrix framework itself, the formed anode material has high energy density. Furthermore, when the value of *α* is between 0.1 and 50, a relatively large amount of silicon is uniformly deposited in the gaps inside the porous carbon matrix. According to tests, the deposition coefficient *γ* of the formed anode material is not less than 0.85, and the value of M is between 0.015 and 5. When applied in practice, the electrical conductivity is not less than 0.7 S/cm, and even reaches as high as 80 S/cm.

In some embodiments, the reaction temperature for silicon deposition is 400-800 °C, and the time is 1-13 h.

When the silicon deposition time is less than 1 hour, the overall content of the silicon material is low, making it difficult to deposit uniformly inside the carbon matrix. When the silicon deposition time exceeds 13 hours, some silicon overflows and deposits on the surface of the carbon matrix, causing the silicon material on the surface of the carbon matrix to easily react with the electrolyte, thereby increasing the gas generation value of the anode material. In addition, after the silicon material deposits on the surface of the carbon matrix, it continues to grow and enlarge, which leads to particle pulverization and detachment, thereby reducing the electrochemical performance of the anode material.

S400: the product obtained from chemical vapor deposition is mixed with a coating material and perform heat treatment to obtain the anode material.

In some embodiments, the coating material includes at least one of carbon materials, metal oxides, conductive polymers, fluorides, phosphates, and nitrides, which is not specifically limited herein.

In some embodiments, the coating material includes carbon materials, and the carbon materials include at least one of soft carbon and hard carbon, which is not specifically limited herein.

In some embodiments, the coating material includes metal oxides, and the metal oxides include at least one of titanium oxide, aluminum oxide, lithium oxide, cobalt oxide, and vanadium oxide, which is not specifically limited herein.

In some embodiments, the coating material includes nitrides, and the nitrides include at least one of titanium nitride, vanadium nitride, cobalt nitride, nickel nitride, and carbon nitride, which is not specifically limited herein.

In some embodiments, the coating material includes conductive polymers, and the conductive polymers include at least one of polyaniline, polyacetylene, polypyrrole, polythiophene, poly(3-hexylthiophene), polyphenylene vinylene, polypyridine, and polyphenylene vinylene, which is not specifically limited herein.

In some embodiments, the coating material includes fluorides, and the fluorides include at least one of vinyl fluoride, fluoropolymers, lithium fluoride, sodium fluoride, potassium fluoride, fluorocarbon polymers, fluorosilicone polymers, hexafluorobutyl acrylate, polytetrafluoroethylene, fluorinated ethylene propylene copolymer, perfluoroalkoxy resin, polychlorotrifluoroethylene, ethylene-chlorotrifluoroethylene copolymer, polyvinylidene fluoride, and polyvinyl fluoride, which is not specifically limited herein.

In some embodiments, the coating material includes phosphate, and the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate, which is not specifically limited here.

In some embodiments, the coating material forms a coating layer on the surface of the carbon matrix, and the thickness of the coating layer is 1-500nm. Specifically, the thickness of the coating layer may be 1m, 10 nm, 50 nm, 100 nm, 200 nm, 300 nm, 500 nm. It is nunderstandable that the coating layer can reduce the solubility of the anode material, thereby reducing the gas evolution caused by the reaction between the dissolved silicon material and the electrolyte. Controlling the thickness of the coating layer within the above range is beneficial for the anode material to maintain the stability of the particle structure during the cycling process, reduce the dissolution of the silicon material, and is beneficial for improving the transmission efficiency of lithium ions and enhancing the charge-discharge performance of the anode material.

The solution of the present application will be explained below in combination with examples. Those skilled in the art will understand that the following examples are only used to explain the present application and cannot be appreciated as a limitation to the present application. Unless otherwise stated, the reagents, software, and instruments involved in the following examples that are not specifically described are all conventional commercially available products or open-source ones.

### Example 1:

(1) 1.7 kg of zinc acetate and 360 g of Pluronic F127 were weighed and dissolved in 20 L of water. Then 4.4 kg of activated carbon (having a specific surface area of 1800 m²/g and a pore volume of 0.8 cm³/g) was added and stirred for 24 h, followed by filtering and drying.
(2) The obtained material was placed in a rotary furnace and calcined at 800 °C under a mixed atmosphere of 10 vol% hydrogen/argon (at a flow rate of 1 L/min) for 4 h to obtain a first precursor.
(3) The first precursor was fed into 10 L of 0.5 mol/L dilute hydrochloric acid and stirred for 6 h. Then the sample was washed with pure water until the pH value of the filtrate was detected to be neutral; the washed solid was dried at 90 °C for 10 hours to obtain a second precursor.
(4) The second precursor was placed in a CVD device, and then silane was introduced into the CVD device at a total flow rate of 200 mL/min. The volume concentration ratio of silane to N₂ was 1:3 (the concentration of silicon-containing gas was 25%), and the total gas flow rate was 35 L/min. The temperature was raised to 500 °C, reaction was carried out for 5 h, and the deposition pressure was set to 10 kPa; after the reaction was completed, the material was cooled to room temperature under nitrogen protection to obtain an anode material.

### Example 2:

The difference from Example 1 was that in step (1), zinc acetate was replaced with zinc chloride, and Pluronic F127 was replaced with PVA.

### Example 3:

The difference from Example 1 was that in step (1), zinc acetate was replaced with zinc chloride.

### Example 4:

The difference from Example 1 was that in step (1), zinc acetate was replaced with zinc nitrate, and Pluronic F127 was replaced with PVP.

### Example 5:

The difference from Example 1 was that in step (1), zinc acetate was replaced with zinc nitrate.

### Example 6:

The difference from Example 1 was that in step (1), Pluronic F127 was replaced with PVA.

### Example 7:

The difference from Example 1 was that in step (3), 0.5 mol/L dilute hydrochloric acid was replaced with 0.75 mol/L dilute hydrochloric acid.

### Example 8:

The difference from Example 1 was that in step (3), 0.5 mol/L dilute hydrochloric acid was replaced with 1 mol/L dilute hydrochloric acid.

### Example 9:

The difference from Example 1 was that in step (3), the stirring time was adjusted to 1 hour.

### Example 10:

The difference from Example 1 was that in step (3), the stirring time was adjusted to 12 hours.

### Example 11:

The difference from Example 1 was that in step (3), 0.5 mol/L dilute hydrochloric acid was replaced with 2 mol/L dilute hydrochloric acid.

### Example 12:

The difference from Example 1 was that in step (3), the stirring time was adjusted to 20 hours.

### Example 13:

The difference from Example 1 was that in step (4), the deposition temperature was adjusted to 400°C.

### Example 14:

The difference from Example 1 was that in step (4), the deposition time was adjusted to 20 hours.

### Example 15:

The difference from Example 1 was that in step (4), the deposition time was adjusted to 1h.

### Example 16:

The difference from Example 1 was that in step (4), the deposition temperature was adjusted to 600°C.

### Comparative Example 1:

The difference from Example 1 was that step (3) was not carried out.

### Comparative Example 2:

The difference from Example 1 was that in step (3), 0.5 mol/L dilute hydrochloric acid was replaced with 0.2mol/L dilute hydrochloric acid.

### Comparative Example 3:

The difference from Example 1 was that in step (3), the stirring time was adjusted to 0.5 hours.

### Comparative Example 4:

The difference from Example 1 was that in step (3), 0.5 mol/L dilute hydrochloric acid was replaced with 2.2 mol/L dilute hydrochloric acid.

### Comparative Example 5:

The difference from Example 1 was that in step (3), the stirring time was adjusted to 21 hours.

### Comparative Example 6:

The difference from Example 1 was that in step (1), Pluronic F127 was replaced with Polyquaternium-16.

### Comparative Example 7:

The difference from Example 1 was that in step (1), Pluronic F127 was replaced with benzalkonium bromide.

### Comparative Example 8:

The difference from Example 1 was that in step (1), Pluronic F127 was removed without replacing it with other components.

### Example 17:

(1) Coconut shells were placed in a carbonization furnace for carbonization, with a specific carbonization temperature of 900°C and a carbonization time of 3 h; the carbonized carbon-based material was mixed with potassium ferrate (K₂FeO₄), with the mass addition of potassium ferrate being 1% of the mass of the coconut shells, followed by activation at 800°C for 10h; then hydrochloric acid was added for acid-washing, with the concentration of the hydrochloric acid being 20% and the cleaning time being 5h, to obtain a carbon-based precursor; the acid-washed carbon-based precursor was dried to obtain a porous carbon precursor.
(2) 1.7kg of zinc acetate and 360g of Pluronic F127 were weighed and dissolved in 20L of water; then 4.4kg of the porous carbon precursor was added and stirred for 24 hours, followed by filtering and drying; then the obtained material was placed in a rotary furnace and calcined for 4 hours under a mixed atmosphere of 10vol% hydrogen/argon with a flow rate of 1 L/min at 800°C to obtain a black powder sample; then the obtained black powder sample was placed into 10L of 0.5 mol/L dilute hydrochloric acid and stirred for 6 hours, then washed with pure water until the pH value of the filtrate water was detected to be neutral; the washed solid was dried at 90 °C for 10 hours to obtain a carbon matrix.
(3) The carbon matrix was placed into a chemical vapor deposition (CVD) device, with the vacuum degree set to 8000 Pa; then silane and nitrogen was introduced into the CVD device, with the concentration of silane being controlled at 50% and the total gas flow rate at 50 L/min; the temperature was raised to 600°C, and reaction was carried out for 4h to obtain a chemical vapor deposition product.
(4) The product obtained from chemical vapor deposition and polyvinyl chloride were mixed in a mass ratio of 50:20, then the mixed material was placed into a high-temperature box furnace, nitrogen was introduced, heat treatment was performed under 660°C, with maintain the temperature held for 2 h; the obtained sample was pulverized, sieved, and classified to obtain an anode material.

In this example, the anode material included a carbon matrix and silicon material, with the silicon material located within the carbon matrix. The test results for the deposition coefficient *γ*, M value, electrical conductivity, and silicon element content of the anode material are tested as shown in Table 4.

As shown in FIG. 2, which is a scanning electron microscope (SEM) image of the anode material prepared in Example 17, it can be seen from the figure that the particle shape was irregular.

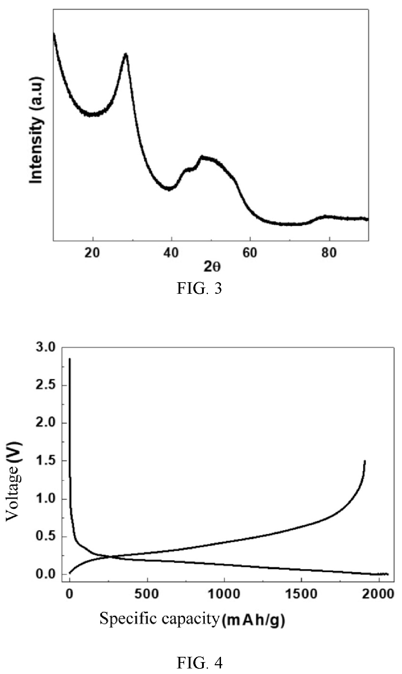

As shown in FIG. 3, which is the XRD pattern of the anode material prepared in Example 17, it can be observed from the figure that the product was amorphous.

As shown in FIG. 4, which is the initial charge-discharge curve of the anode material prepared in Example 17, it can be seen from the figure that the initial charge-discharge capacity of the anode material of Example 17 was 2098 mAh/g, and the initial efficiency was 93.1%.

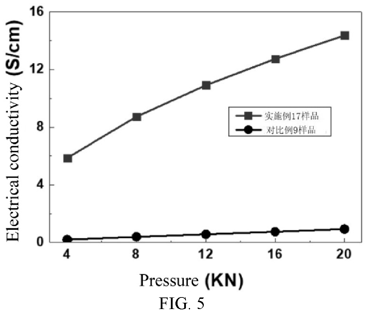

As shown in FIG. 5, which was the electrical conductivity graph of the anode material prepared in Example 17, it can be seen from the figure that the electrical conductivity of Example 17 shows an upward trend with the increase of pressure and far exceeds the electrical conductivity of the sample in Comparative Example 9.

### Example 18

(1) Bamboo charcoal was placed into a carbonization furnace for carbonization, with a specific carbonization temperature of 1200°C and a carbonization time of 4h; a mixture of nickel nitrate and potassium hydroxide (mass ratio of 1:89) was added to the treated carbon-based material, with the mass addition amount of the mixture of nickel nitrate and potassium hydroxide being 2.5% of the mass of the bamboo charcoal, followed by activation at 800°C for 10h; then hydrochloric acid was added for acid-washing, with the concentration of the hydrochloric acid being 20% and the cleaning time being 5h, to obtain a carbon-based precursor; the acid-washed carbon-based precursor was dried to obtain a porous carbon precursor.
(2) 1.7kg of zinc chloride and 360g of Pluronic PVA were weighed and dissolved in 20L of water; then 4.4 kg of the porous carbon precursor was added and stirred for 24 hours, followed by filtering and drying; then the obtained material was placed in a rotary furnace and calcined for 4 hours under a mixed atmosphere of 10 vol% hydrogen/argon with a flow rate of 1 L/min at 800°C to obtain a black powder sample; finally, the obtained black powder sample was placed into 10L of 0.5 mol/L dilute hydrochloric acid and stirred for 6 hours, then washed with pure water until the pH value of the filtrate water was detected to be neutral; the washed solid was dried at 90 °C for 10 hours to obtain a carbon matrix.
(3) The carbon matrix was placed into a chemical vapor deposition (CVD) device, with the vacuum degree set to 10130Pa; then silane and nitrogen was introduced into the CVD device, with the concentration of silane being controlled at 80% and the total gas flow rate at 72L/min; the temperature was raised to 400°C and reaction was carried out for 4h to obtain a chemical vapor deposition product.
(4) The product obtained from chemical vapor deposition and sucrose were mixed in a mass ratio of 50:45, then the mixed material was placed into a high-temperature box furnace, nitrogen was introduced, heat treatment was performed under 920°C, with maintain the temperature held for 2 h; the obtained sample was pulverized, sieved, and classified to obtain an anode material.

In this example, the anode material included a carbon matrix and silicon material, the silicon material was located within the carbon matrix, and the test results for the deposition coefficient *γ*, M value, electrical conductivity, and silicon element content of the anode material are shown in Table 4.

### Example 19

(1) Graphite was mixed with the activating agent potassium hydroxide (KOH), with the mass addition of the activating agent KOH being 4.4% of the graphite mass, followed by activation at 1100°C for 10h; then hydrochloric acid was added for acid-washing, with the concentration of the hydrochloric acid being 10% and the cleaning time being 6h, to obtain a carbon-based precursor; the acid-washed carbon-based precursor was dried to obtain a porous carbon precursor.
(2) 1.7kg of zinc sulfate and 360g of F127 were weighed and dissolved in 20L of water; then 4.4kg of the porous carbon precursor was added and stirred for 24 hours, followed by filtering and drying; then the obtained material was placed in a rotary furnace and calcined for 4 hours under a mixed atmosphere of 10vol% hydrogen/argon with a flow rate of 1 L/min at 800°C to obtain a black powder sample; finally, the obtained black powder sample was placed into 10L of 0.5 mol/L dilute hydrochloric acid and stirred for 6 hours, then washed with pure water until the pH value of the filtrate water was detected to be neutral; the washed solid was dried at 90 °C for 10 hours to obtain a carbon matrix.
(3) The carbon matrix was placed into a chemical vapor deposition (CVD) device, with the vacuum degree set to 5000Pa; then silane and nitrogen was introduced into the CVD device, with the concentration of silane being controlled at 10% and the total gas flow rate at 35L/min; the temperature was raised to 500°C and reaction was carried out for 3h to obtain a chemical vapor deposition product.
(4) The product obtained from chemical vapor deposition and epoxy resin were mixed in a mass ratio of 50:25, then the mixed material was placed into a high-temperature box furnace, nitrogen was introduced, heat treatment was performed under 620°C, with maintain the temperature held for 2 h; the obtained sample was pulverized, sieved, and classified to obtain an anode material.

In this example, the anode material included a carbon matrix and a silicon material, the silicon material was located within the carbon matrix, and the test results for the deposition coefficient *γ*, M value, electrical conductivity, and silicon element content of the anode material are shown in Table 4.

### Example 20

(1) Coconut shells were carbonized at a carbonization temperature of 800°C for a duration of 12 h; a mixture of ferric chloride and KOH (with a mass ratio of 5:95) was added to the treated carbon-based material, with the mass addition of the mixture of ferric chloride and KOH being 3.9% of the mass of the coconut shells, followed by activation at 850°C for 10h; then hydrochloric acid was added for acid-washing, with the concentration of the hydrochloric acid being 25% and the cleaning time being 5h, to obtain a carbon-based precursor; the acid-washed carbon-based precursor was dried to obtain a porous carbon precursor.
(2) 1.7kg of zinc acetate and 360g of Pluronic F127 were weighed and dissolved in 20L of water; then 4.4kg of the porous carbon precursor was added and stirred for 24 hours, followed by filtering and drying; then the obtained material was placed in a rotary furnace and calcined for 4 hours under a mixed atmosphere of 12 vol% hydrogen/argon with a flow rate of 1 L/min at 900°C to obtain a black powder sample; then the obtained black powder sample was placed into 12L of 0.5 mol/L dilute hydrochloric acid and stirred for 6 hours, then washed with pure water until the pH value of the filtrate water was detected to be neutral; the washed solid was dried at 90 °C for 10 hours to obtain a carbon matrix.
(3) The carbon matrix was placed into a chemical vapor deposition (CVD) device, with the vacuum degree set to 500Pa; then silane and nitrogen was introduced into the CVD device, with the concentration of silane being controlled at 20% and the total gas flow rate at 30L/min; the temperature was raised to 600°C and reaction was carried out for 1h to obtain a chemical vapor deposition product.
(4) The product obtained from chemical vapor deposition and citric acid were mixed in a mass ratio of 50:20, then the mixed material was placed into a high-temperature box furnace, nitrogen was introduced, heat treatment was performed under 760°C, with maintain the temperature held for 2 h; the obtained sample was pulverized, sieved, and classified to obtain an anode material.

In this example, the anode material includes a carbon matrix and a silicon material, the silicon material was located within the carbon matrix, and the test results for the deposition coefficient *γ* , 2M value, electrical conductivity, and silicon element content of the anode material are shown in Table 4.

### Example 21

The difference from Example 17 lies in step (1): coconut shells were placed into a carbonization furnace for carbonization, with a specific carbonization temperature of 900°C and a carbonization time of 3 h; the carbonized porous carbon matrix material was mixed with potassium ferrate (K₂FeO₄), with the mass addition amount of potassium ferrate being 0.2% of the mass of the coconut shells; activation was carried out at 800°C for 10h, then hydrochloric acid was added for acid-washing, with the hydrochloric acid concentration being 20% and the cleaning time being 5 h, to obtain a carbon-based precursor; the acid-washed carbon-based precursor was dried to obtain a porous carbon precursor.

In this example, the anode material included a carbon matrix and a silicon material, the silicon material was located within the carbon matrix, and the test results for the deposition coefficient *γ*, M value, electrical conductivity, and silicon element content of the anode material are shown in Table 4.

### Example 22

The difference from Example 17 lies in step (1): coconut shells were placed into a carbonization furnace for carbonization, with a specific carbonization temperature of 900°C and a carbonization time of 3 h; the carbonized porous carbon matrix material was mixed with potassium ferrate (K₂FeO₄), with the mass addition amount of potassium ferrate being 3% of the mass of the coconut shells; activation was carried out at 800°C for 10h, then hydrochloric acid was added for acid-washing, with the hydrochloric acid concentration being 20% and the cleaning time being 5 h, to obtain a carbon-based precursor; the acid-washed carbon-based precursor was dried to obtain a porous carbon precursor.

In this example, the anode material included a carbon matrix and a silicon material, the silicon material was located within the carbon matrix, and the test results for the deposition coefficient *γ*, M value, electrical conductivity, and silicon element content of the anode material are shown in Table 4.

### Example 23

The difference from Example 19 lies in step (3): the carbon matrix was placed into a chemical vapor deposition (CVD) device, with the vacuum degree set to 5000Pa; then silane and nitrogen was introduced into the CVD device, with the concentration of silane being controlled at 10% and the total gas flow rate at 35L/min; the temperature was raised to 500°C and reaction was carried out for 1.5h to obtain a chemical vapor deposition product.

In this example, the anode material included a carbon matrix and a silicon material, the silicon material was located within the carbon matrix, and the test results for the deposition coefficient *γ*, M value, electrical conductivity, and silicon element content of the anode material are shown in Table 4.

### Example 24

The difference from Example 17 lies in step (3): the carbon matrix was placed into a chemical vapor deposition (CVD) device, with the vacuum degree set to 1250Pa; then silane and nitrogen was introduced into the CVD device, with the concentration of silane being controlled at 50% and the total gas flow rate at 16L/min; the temperature was raised to 500°C and reaction was carried out for 1.5h to obtain a chemical vapor deposition product.

### Example 25

The difference from Example 17 lies in in step (3): the carbon matrix was placed into a chemical vapor deposition (CVD) device, with the vacuum degree set to 680Pa; then silane and nitrogen was introduced into the CVD device, with the concentration of silane being controlled at 50% and the total gas flow rate at 26L/min; the temperature was raised to 500°C and reaction was carried out for 1.5h to obtain a chemical vapor deposition product.

### Example 26

The difference from Example 17 lies in step (1): coconut shells were placed into a carbonization furnace for carbonization, with a specific carbonization temperature of 900°C and a carbonization time of 3 h; the carbonized porous carbon matrix material was mixed with potassium ferrate (K₂FeO₄), with the mass addition amount of potassium ferrate being 5% of the mass of the coconut shells; activation was carried out at 800°C for 10h, then hydrochloric acid was added for acid-washing, with the hydrochloric acid concentration being 20% and the cleaning time being 5 h, to obtain a carbon-based precursor; the acid-washed carbon-based precursor was dried to obtain a porous carbon precursor.

### Example 27

The difference from Example 17 lies in: a mixture of nickel nitrate and potassium hydroxide (with a mass ratio of 1:89) was added to the treated carbon-based material, with the mass addition amount of the mixture of nickel nitrate and potassium hydroxide being 2.5% of the bamboo charcoal mass, and activation was carried out at 800°C for 6 h.

### Example 28

The difference from Example 17 lies in: a mixture of nickel nitrate and potassium hydroxide (with a mass ratio of 1:89) was added to the treated carbon-based material, with the mass addition amount of the mixture of nickel nitrate and potassium hydroxide being 2.5% of the bamboo charcoal mass, and activation was carried out at 800°C for 20 h.

### Comparative Example 9

The difference from Example 17 lies in step (1): coconut shells were placed into a carbonization furnace for carbonization, with a specific carbonization temperature of 900°C and a carbonization time of 3 h; the carbonized carbon-based material was acid-washed with a acid-washing concentration of 20% and a cleaning time of 5 h, and the acid-washed carbon-based precursor was dried to obtain a porous carbon precursor. That is, only carbonization and acid-washing treatments were performed on the coconut shells without activation to obtain a carbon precursor.

### Comparative Example 10

The difference from Example 17 lies in step (1): coconut shells were placed into a carbonization furnace for carbonization, with a specific carbonization temperature of 900°C and a carbonization time of 3 h; the carbonized porous carbon matrix material was mixed with potassium ferrate (K₂FeO₄), with the mass addition amount of potassium ferrate being 0.05% of the mass of the coconut shells; activation was carried out at 800°C for 10h, then hydrochloric acid was added for acid-washing, with the hydrochloric acid concentration being 20% and the cleaning time being 5 h, to obtain a carbon-based precursor; the acid-washed carbon-based precursor was dried to obtain a porous carbon precursor.

### Comparative Example 11

The difference from Example 17 lies in step (1): coconut shells were placed into a carbonization furnace for carbonization, with a specific carbonization temperature of 900°C and a carbonization time of 3 h; the carbonized porous carbon matrix material was mixed with potassium ferrate (K₂FeO₄), with the mass addition amount of potassium ferrate being 5.2% of the mass of the coconut shells; activation was carried out at 800°C for 10h, then hydrochloric acid was added for acid-washing, with the hydrochloric acid concentration being 20% and the cleaning time being 5 h, to obtain a carbon-based precursor; the acid-washed carbon-based precursor was dried to obtain a porous carbon precursor.

### Comparative Example 12

The difference from Example 17 is that step (2) was not performed, i.e., the porous carbon precursor was not pretreated.

### Comparative Example 13

The difference from Example 17 lies in step (3): the carbon matrix was placed into a chemical vapor deposition (CVD) device, with the vacuum degree set to 8000Pa; then silane and nitrogen was introduced into the CVD device, with the concentration of silane being controlled at 50% and the total gas flow rate at 50L/min; the temperature was raised to 600°C and reaction was carried out for 0.5h to obtain a chemical vapor deposition product.

### Comparative Example 14

The difference from Example 17 lies in step (3): the carbon matrix was placed into a chemical vapor deposition (CVD) device, with the vacuum degree set to 700Pa; then silane and nitrogen was introduced into the CVD device, with the concentration of silane being controlled at 30% and the total gas flow rate at 35L/min; the temperature was raised to 500°C and reaction was carried out for 1h to obtain a chemical vapor deposition product.

### Comparative Example 15

The difference from Example 17 lies in step (3): the carbon matrix was placed into a chemical vapor deposition (CVD) device, with the vacuum degree set to 8000Pa; then silane and nitrogen was introduced into the CVD device, with the concentration of silane being controlled at 50% and the total gas flow rate at 50L/min; the temperature was raised to 600°C and reaction was carried out for 14h to obtain a chemical vapor deposition product.

### Test methods:

A test method for the deposition parameter *γ* of the silicon material in the anode material included: taking an anode material with a mass of *m*₁, using a Micromeritics ASAP2460 micropore specific surface area and pore size analyzer to measure the specific pore volume *p*₁, using a Nanyang Xinyu SA2-9-17TP box-type atmosphere furnace to burn in an oxygen atmosphere so that the silicon and silicon suboxide in the sample react to become silicon dioxide, and the carbon burns off as carbon dioxide, then weighing to calculate the silicon content percentage *a*₁; using a acid solution prepared with 70% HNO₃ and 50% HF in a volume ratio of 2:1, placing the anode material into the solution and stirring for over 10 hours; after cleaning and drying, measuring the mass of the remaining material as *m*₂, the specific pore volume as *p*₂, and the silicon content percentage as *a*₂ using the same method; taking the density of silicon particles as 2.34, with a unit of g/cm³ and calculating the deposition parameter *γ* of the silicon particles in the anode material using the following formula:
$γ = \frac{{m}_{1} \times {p}_{1} - {m}_{2} \times {p}_{2}}{\left({m}_{1}\times {a}_{1}-{m}_{2}\times {a}_{2}\right) / 2.34 g / cm 3} .$

A test method for the specific pore volume (PV), average pore size, and volume proportions of micropores, mesopores, and macropores of the anode material included: referring to GB/T 19587-2017 "Gas Adsorption BET Method for Determination of Specific Surface Area of Solid Materials-Volumetric Method" and measuring using a Micromeritics ASAP2460 micropore specific surface area and pore size analyzer; calculating the pore volume using a BJHDesorption cumulative volume of pores model within a pore size range of 17 Å-3000 Å; performing micropore and mesopore analysis using a Micromeritics ASAP 2460. At liquid nitrogen temperature, the equilibrium adsorption amount of nitrogen on the object surface is related to its pore size and other characteristics. Combined with the law of adsorption amount changing with relative pressure during the adsorption process, various models may be fitted to calculate the pore size. The Density Functional Theory (DFT) method was used for the report generated by the software to calculate the pore size distribution, specific pore volume, and pore volume within a certain range.

A test method for the mass percentage of carbon element in the anode material included: using a Bruker G4 ICARUS HF infrared carbon-sulfur analyzer; with reference to GB/T 20123-2006 (Steel and Iron-Determination of Total Carbon and Sulfur Contents-Infrared Absorption Method after Combustion in a High-frequency Induction Furnace (Routine Method)) and GB/T 38823-2020 (Determination of Carbon Content in Anode Materials for Lithium-ion Batteries), taking 0.35 g of pure iron flux, 0.1 ± 0.0010 g of a sample, and 1 g of tungsten-tin flux into a ceramic crucible, burning in a high-frequency furnace with oxygen, determining CO₂ concentration in the combustion gas by infrared absorption, and calculating the mass fraction of carbon in the sample..

A test method for the mass percentage of silicon element in the anode material included: using a Nanyang Xinyu SA2-9-17TP box-type atmosphere furnace to burn a sample in an oxygen atmosphere, so that the silicon and silicon suboxide in the sample reacted to become silicon dioxide, and the carbon was burned and discharged as carbon dioxide, then weighing to calculate the silicon content by. Specifically, the method comprises: weighing 1.0 g to 1.2 g of a sample into a corundum crucible (accurate to 0.1 mg), and placing the crucible into a muffle furnace for programmed heating: an initial temperature of 30 °C, raising to 400 °C in 30 min, maintaining at 400 °C for 60 min, raising to 900 °C in 60 min, maintaining at 900 °C for 120 min, raising to 1200 °C in 30 min, and maintaining at 1200 °C for 480 min; when a temperature of the muffle furnace drops to below 400 °C, opening a furnace door, taking out the crucible and slightly cooling for 2 minutes to 5 minutes, placing the crucible into a desiccator, and cooling to room temperature; weighing a total weight of the cooled crucible and product by using an analytical balance with a precision of 0.1 mg; placing the crucible and the product into the muffle furnace again, setting a heating program of: raising to 400 °C in 30 min and maintaining for 60 min; raising to 1200 °C in 90 min and maintaining for 120 min; after burning is completed, cooling and weighing by a method similar to the previous step, recording the total weight of the crucible and the product, and comparing a weight difference from that after the first burning; if the weight difference does not exceed 0.3 mg, the test is ended; otherwise repeating this step until the weight difference after two burnings does not exceed 0.3 mg; and calculating the silicon content by using a formula Si% = (m₃ - m₀) / m₁ × (28.09 / 60.09) × 100%, where m₃ is a total weight of the crucible and the product after reaching constant weight, m₀ is a weight of the crucible, and m₁ is a weight of the sample.

A test method for the specific surface area (SSA) of the anode material included: measuring by using a Micromeritics TriStar3000 specific surface area and pore size analyzer. With reference to GB/T 19587-2017 "Gas Adsorption BET Method for Determination of Specific Surface Area of Solid Materials-Volumetric Method", a specific surface area and pore size distribution of the material are tested: taking a dried sample tube, and weighing an amount of the material occupying 1/2 to 2/3 of a bulb volume of the sample tube; before testing, degassing treatment is required (to remove moisture or impurities), and the degassing may be performed by a vacuum heating method or a nitrogen purge method (vacuum heating method: setting a degassing temperature of 300 °C and a degassing time of 1 h; after degassing is completed, placing in a cooling bath or on an external sample tube rack for cooling for 20 min, then backfilling with gas for 5 s to 10 s (depending on the situation, to avoid sample spouting and adhering to a side wall of the sample tube), and then disassembling the sample tube and rapidly sealing the sample tube with a rubber septum for subsequent testing; nitrogen purge method: setting a degassing temperature of 300 °C and a degassing time of 1 h; after purging is completed, placing in a cooling bath or on an external sample tube rack for cooling for 20 min, then rapidly removing the rubber septum to pull out the degassing needle, and rapidly resealing with the rubber septum to avoid air entry); and measuring according to an instruction manual of the specific surface area and pore size analyzer.

A test method for the powder electrical conductivity of the anode material included: using a Mitsubishi Chemical MCP-PD51 powder resistance test system to test the electrical conductivity at a 20 KN pressure point, and using the four-probe method to determine the volume resistivity of the sample. The instrument may be used to measure the resistance of the powder, and then the computer automatically calculates the powder electrical conductivity and resistivity.

A test method for the average gas evolution of the anode material included: (1) preparing each slurry in a certain proportion at room temperature (preparing a glue with 1.4% carboxymethyl cellulose (CMC), and after dispersing uniformly, taking 10 g of the glue and mixing it with 10 g of the anode material sample), and mixing the components of the above slurry to prepare the slurry; (2) loading the slurry into an aluminum-plastic film bag and recording the mass of the slurry; (3) then sealing it to form a sealed aluminum-plastic film bag; (4) measuring the volume of gas generated: fixing the sealed aluminum-plastic film bag at the bottom of a container, completely immersing it in water, and recording the volume of the aluminum-plastic film bag; (5) after a fixed time (24 h), recording the volume of the aluminum-plastic film bag again; (6) calculating the gas evolution of the silicon anode material according to the volume change of the aluminum-plastic film, unit: mL/g.

A test methods for D10, D50, and D90 of the anode material includes: using a laser particle size analyzer to measure D50, which has a symmetric distribution similar to a normal distribution. In its volume-based distribution, the cumulative 50% diameter is D50, and by analogy, the cumulative 90% diameter is D90, and the cumulative 10% diameter is D10, from which the particle size distribution (D90-D10)/D50 of the material can also be obtained. The specific test method refers to GB/T 19077-2016. A volume-based cumulative particle size distribution of the anode material is measured by a Malvern Mastersizer 3000 laser particle size analyzer by a laser diffraction method, wherein D50 represents a particle size corresponding to a cumulative particle size distribution percentage of 50%, D90 represents a particle size corresponding to a cumulative particle size distribution percentage of 90%, and D10 represents a particle size corresponding to a cumulative particle size distribution percentage of 10%. During testing, first 1 mL of an aqueous surfactant solution diluted at a mass ratio of 1:50 is taken and added to a beaker containing an appropriate amount of the anode material sample and stirred; then pure water is added and stirred uniformly for testing (a ratio of the sample amount to water should be such that an obscuration during testing is between 8% and 15%).

A test method for the compaction density of the anode material included: using a US Carver 4350.22 powder compaction density tester, with reference to GB/T 24533-2019 "Graphite Anode Materials for Lithium-ion Batteries" to perform a compaction density test on the material: placing a specified mass m of the sample into a mold, applying a 1.0 T pressure, maintaining the pressure for 30 S, then releasing the pressure to measure its thickness, and calculating the compaction density: ρ = 10m / (S × H), where m is the mass of the sample in g, S is a cross-sectional area of the mold in cm², and H is the thickness of the sample after compaction in cm.

A test method for the tap density of the anode material includes: using a Meikangta DAT-6-220 tap density tester, with reference to GB/T 5162-2006/ISO 3953:1993 "Determination of Tap Density of Metallic Powders", to test a tap density of the material: placing 50 g of a sample into a 100 mL graduated cylinder, vibrating according to a specified number of times (conventional testing involves tapping 3000 times at a vibration frequency of 260 times/minute and a vibration amplitude of 3 mm), reading a volume of the graduated cylinder after vibration, and calculating a tap density, a calculation formula being: tap density = sample mass / volume of the graduated cylinder after vibration.

A test method for the average particle size of the silicon material includes: performing section processing on the material by using a dual beam focused ion beam microscope (Dual Beam FIB-SEM), randomly selecting 10 anode material particles to prepare sections; then using a scanning electron microscope (SEM) or a transmission electron microscope (TEM) to randomly select 10 silicon material particles (100 measurement points in total) on a section of each anode material particle, clearly resolving particle boundaries at a magnification of 100,000× to 500,000×, measuring a longest axis diameter of each particle by using an electron microscope scale bar or ImageJ software, and finally calculating an average value of all measured values.

A test method for a thickness of a coating layer includes: fixing the anode material on a sample stage with a conductive adhesive, preparing a flat section by using an argon ion milling machine (ion beam energy of 5 keV, milling angle of 10°, milling time of 2 hours); observing the section by using a scanning electron microscope (SEM, acceleration voltage of 10 kV, working distance of 8 mm, backscattered electron detector), selecting 5 clear images at different positions, uniformly selecting 15 points on each image, measuring a distance from an interface between a carbon layer and an active material to an outer surface of the carbon layer, and taking an average value of all the points as a thickness of the carbon material.

For the above test results, please refer to Table 1-1, Table 1-2, Table 2, Table 3, and Table 4:

**Table 1-1 Physical property test results of anode materials in Examples 1-8 of the present application**

| | Example 1 | Example 2 | Example 3 | Example 4 | Example 5 | Example 6 | Example 7 | Example 8 |
|---|---|---|---|---|---|---|---|---|
| *γ* | 0.93 | 0.9 | 0.86 | 0.98 | 0.96 | 0.89 | 0.94 | 0.95 |
| 20KN powder electrical conductivity (S/cm) | 1.3 | 1 | 1.2 | 1.9 | 1.7 | 0.9 | 1.4 | 1.5 |
| Anode material SSA(m²/g) | 5.3 | 6.8 | 9.7 | 0.9 | 3.1 | 7 | 4.9 | 4.1 |
| Anode material PV(cm³/g) | 0.055 | 0.064 | 0.083 | 0.008 | 0.019 | 0.071 | 0.048 | 0.04 |
| Average pore size of anode material (nm) | 25.2 | 17 | 12.8 | 40.1 | 35.4 | 14.9 | 29.7 | 30.6 |
| Micropore volume proportion (%) | 5 | 6 | 9 | 1 | 2 | 7 | 4 | 3 |
| Mesopore volume proportion (%) | 87 | 89 | 89 | 90 | 94 | 92 | 93 | 91 |
| Macropore volume proportion (%) | 8 | 5 | 2 | 9 | 4 | 1 | 3 | 6 |
| C element content (wt%) | 53 | 51 | 46 | 50 | 45 | 43 | 54 | 55 |
| Si element content (wt%) | 45 | 48 | 52 | 47 | 53 | 55 | 43 | 43 |
| 7-day gas evolution (ml/g) | 0.2 | 0.3 | 0.5 | 0.25 | 0.58 | 0.76 | 0.18 | 0.16 |
| Compaction density (g/cm³) | 1.1 | 1 | 1.2 | 1.3 | 0.8 | 0.9 | 1 | 1.1 |
| Tap density (g/cm³) | 1 | 0.8 | 1.2 | 1.3 | 0.8 | 0.9 | 1 | 1.1 |
| D50(µm) | 10.2 | 13.4 | 15.6 | 12.5 | 10 | 15 | 10.2 | 10.3 |
| (D90-D10)/D50 | 3 | 2.3 | 3.6 | 1.9 | 4 | 1.7 | 3 | 2.9 |

**Table 1-2 Physical property test results of the anode material in Examples 9-16 of the present application**

| | Example 9 | Example 10 | Example 11 | Example 12 | Example 3 | Example 14 | Example 15 | Example 16 |
|---|---|---|---|---|---|---|---|---|
| *γ* | 0.87 | 0.97 | 0.98 | 0.98 | 0.93 | 0.85 | 0.99 | 0.88 |
| 20KN powder electrical conductivity (S/cm) | 0.6 | 1.8 | 1.9 | 1.9 | 1.6 | 0.5 | 2.0 | 0.7 |
| Anode material SSA(m²/g) | 8.6 | 1.3 | 1 | 1.2 | 9.8 | 0.6 | 9.6 | 0.4 |
| Anode material PV(cm³/g) | 0.089 | 0.016 | 0.009 | 0.01 | 0.124 | 0.0012 | 0.098 | 0.0023 |
| Average pore size of anode material (nm) | 13.5 | 37.8 | 41.2 | 42.1 | 49.8 | 0.41 | 43.1 | 0.52 |
| Micropore volume proportion (%) | 8 | 2 | 1 | 1 | 9 | 1 | 19 | 1 |
| Mesopore volume proportion (%) | 85 | 88 | 86 | 85 | 80 | 95 | 60 | 96 |
| Macropore volume proportion (%) | 7 | 10 | 13 | 14 | 11 | 4 | 21 | 3 |
| C element content (wt%) | 42 | 56 | 61 | 62 | 59 | 42 | 65 | 40 |
| Si element content (wt%) | 55 | 42 | 38 | 37 | 40 | 54 | 34 | 55 |
| 7-day gas evolution (ml/g) | 0.85 | 0.12 | 0.12 | 0.11 | 0.09 | 0.91 | 0.05 | 0.98 |
| Compaction density (g/cm³) | 0.8 | 0.9 | 0.9 | 1 | 1.1 | 1.2 | 1.1 | 1.2 |
| Tap density (g/cm³) | 0.5 | 0.6 | 0.8 | 0.9 | 1 | 1.1 | 1 | 1.1 |
| D50(µm) | 10.1 | 10.2 | 10.3 | 10.2 | 10.2 | 10.3 | 10.2 | 10.3 |
| (D90-D10)/ D50 | 3.1 | 3 | 2.9 | 3 | 3 | 2.9 | 3 | 2.9 |

**Table 2 Physical property test results of the anode material of Comparative Examples 1-8 of the present application**

| | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|
| *γ* | 0.61 | 0.79 | 0.68 | 0.81 | 0.79 | 0.69 | 0.57 | 0.67 |
| 20KN powder electrical conductivity (S/cm) | 0.2 | 0.4 | 0.3 | 1.4 | 1.5 | 0.3 | 0.2 | 0.3 |
| Anode material SSA(m²/g) | 12.5 | 10.2 | 11.3 | 4.9 | 4.1 | 11.2 | 12.9 | 11.6 |
| Anode material PV(cm³/g) | 0.132 | 0.114 | 0.125 | 0.102 | 0.111 | 0.124 | 0.139 | 0.127 |
| Average pore size of anode material (nm) | 0.31 | 0.43 | 0.39 | 2.9 | 2.1 | 0.38 | 1.49 | 0.6 |
| Micropore volume proportion (%) | 13 | 11 | 12 | 11 | 13 | 12 | 19 | 13 |
| Mesopore volume proportion (%) | 79 | 68 | 66 | 78 | 71 | 71 | 80 | 73 |
| Macropore volume proportion (%) | 8 | 21 | 22 | 11 | 14 | 17 | 1 | 14 |
| C element content (wt%) | 35 | 39 | 37 | 63 | 64 | 38 | 30 | 36 |
| Si element content (wt%) | 60 | 56 | 58 | 35 | 35 | 57 | 65 | 59 |
| 7-day gas evolution (ml/g) | 1.49 | 1.4 | 1.45 | 0.10 | 0.09 | 1.46 | 1.5 | 1.47 |
| Compaction density (g/cm³) | 0.9 | 0.9 | 0.9 | 0.9 | 0.9 | 0.9 | 0.9 | 0.9 |
| Tap density (g/cm³) | 0.7 | 0.7 | 0.8 | 0.8 | 0.8 | 0.7 | 0.8 | 0.7 |
| D50(µm) | 10.2 | 10.2 | 10.1 | 10.3 | 10.1 | 10.2 | 10.1 | 10.2 |
| (D90-D10)/ D50 | 3 | 3 | 3.1 | 2.9 | 3.1 | 3 | 3.1 | 3 |

**Table 3: Parameters of the anode material for Examples 17-28 and Comparative Examples 9-15**

| Example | Specific surface area /(m²/g) | D50/(µm) | (D90-D10)/D50 | Mesopore volume proportion % | Macropore volume proportion % | Micropore volume proportion % | Average pore size / (nm) |
|---|---|---|---|---|---|---|---|
| Example 17 | 2.1 | 8.1 | 1.1 | 76 | 0 | 24 | 1.9 |
| Example 18 | 1.5 | 3.9 | 1.3 | 69.9 | 0.1 | 30 | 1.5 |
| Example 19 | 1.8 | 11.5 | 1.5 | 74.8 | 0.2 | 25 | 1.7 |
| Example 20 | 1.9 | 14.5 | 1.8 | 81.5 | 0.5 | 18 | 1.6 |
| Example 21 | 3.1 | 9.1 | 1.3 | 80 | 0 | 20 | 1.8 |
| Example 22 | 3.3 | 8.8 | 1.2 | 80 | 1 | 19 | 1.95 |
| Example 23 | 4.2 | 7.1 | 1.04 | 89.4 | 0.2 | 10.4 | 1.98 |
| Example 24 | 1.1 | 7.5 | 0.9 | 86.7 | 0.3 | 13 | 2.01 |
| Example 25 | 0.6 | 7.9 | 0.88 | 84.5 | 0.5 | 15 | 2.3 |
| Example 26 | 4.9 | 8.3 | 0.74 | 83.8 | 0.2 | 16 | 2.1 |
| Example 27 | 2.3 | 8.4 | 1.05 | 65.4 | 0.6 | 34 | 2.3 |
| Example 28 | 2.9 | 8.5 | 0.98 | 69 | 1 | 30 | 2.7 |
| Comparative example 9 | 2.3 | 7.7 | 1.1 | 67 | 2 | 31 | 2.4 |
| Comparative example 10 | 4.3 | 7.5 | 1.2 | 71 | 7 | 22 | 2.8 |
| Comparative example 11 | 3.1 | 8 | 1.21 | 71 | 5 | 24 | 2.6 |
| Comparative example 12 | 1.9 | 6.9 | 1.14 | 74 | 10 | 16 | 2.9 |
| Comparative example 13 | 1.1 | 7.4 | 1.12 | 69 | 12 | 19 | 3.1 |
| Comparative example 14 | 2.5 | 8.1 | 0.95 | 79 | 15 | 6 | 3.3 |
| Comparative example 15 | 4 | 8.9 | 0.98 | 85 | 0.8 | 14.2 | 2.56 |

**Table 4: Relevant parameter results of the anode material for Examples 17-28 and Comparative Examples 9-15**

| Example | Electrical conductivity σ/(S/cm) | Deposition parameter γ | Si element content a1 | M | Specific pore volume /(cm³/g) | Carbon element content | Gas generation /(mL/g) |
|---|---|---|---|---|---|---|---|
| Example 17 | 3.9 | 0.91 | 48% | 0.081 | 0.04 | 49% | 0.1 |
| Example 18 | 10 | 0.94 | 44% | 0.23 | 0.02 | 55% | 0.07 |
| Example 19 | 22 | 0.97 | 32% | 0.69 | 0.003 | 66.80% | 0.06 |
| Example 20 | 8 | 0.85 | 49% | 0.16 | 0.01 | 49.10% | 0.12 |
| Example 21 | 0.74 | 0.85 | 49.10% | 0.015 | 0.06 | 50.30% | 0.11 |
| Example 22 | 17.9 | 0.93 | 49.40% | 0.36 | 0.07 | 49.40% | 0.072 |
| Example 23 | 80 | 0.98 | 16% | 5 | 0.08 | 81.40% | 0.05 |
| Example 24 | 1.5 | 0.82 | 48% | 0.031 | 0.09 | 51.00% | 0.13 |
| Example 25 | 7.3 | 0.96 | 48.40% | 0.15 | 0.1 | 49.90% | 0.052 |
| Example 26 | 10.9 | 0.85 | 47.40% | 0.23 | 0.01 | 50.10% | 0.11 |
| Example 27 | 2.6 | 0.9 | 54% | 0.048 | 0.05 | 44% | 0.07 |
| Example 28 | 1.7 | 0.91 | 65% | 0.026 | 0.06 | 33.50% | 0.09 |
| Comparative example 9 | 0.18 | 0.14 | 49% | 0.00037 | 0.11 | 50.30% | 0.9 |
| Comparative example 10 | 0.9 | 0.82 | 49.20% | 0.018 | 0.15 | 49.40% | 0.15 |
| Comparative example 11 | 28 | 0.84 | 49.40% | 0.57 | 0.2 | 50.10% | 0.32 |
| Comparative example 12 | 0.1 | 0.61 | 49% | 0.002 | 0.32 | 49.90% | 0.39 |
| Comparative example 13 | 75 | 0.98 | 15% | 5 | 0.18 | 84.10% | 0.06 |
| Comparative example 14 | 0.69 | 0.72 | 49.30% | 0.014 | 0.66 | 49.50% | 0.21 |
| Comparative example 15 | 0.03 | 0.36 | 65.90% | 0.00046 | 0.01 | 34.50% | 5.9 |

In the present application, coin-type batteries were prepared using the anode material of Examples 1-16 and Comparative Examples 1-8, respectively. Specifically, an anode slurry was prepared by mixing the anode material, conductive carbon black, and PAA (Polyacrylic acid) in a mass ratio of 70:15:15, coated onto copper foil, and dried to form an anode sheet. Using a lithium metal sheet as the counter electrode, coin-type batteries were assembled in a glove box filled with Ar gas.

In the present application, the initial discharge specific capacity and initial coulombic efficiency of the coin-type batteries from Examples 1-16 and Comparative Examples 1-8 were tested. The test conditions included: charging and discharging the coin-type batteries at a current density of 0.1 C within a voltage range of 0.01-5 V. Please refer to Table 5; compared with Comparative Examples 1-8, the coin-type batteries of Examples 1-16 have significantly higher initial coulombic efficiency.

**Table 5. Initial discharge performance test results of coin-type batteries of Examples 1-16 and Comparative Examples 1-8 of the present application**

| | Initial discharge specific capacity (mAh/g) | Initial coulombic efficiency ICE (%) |
|---|---|---|
| Example 1 | 1779.8 | 90.8 |
| Example 2 | 1897.5 | 91.1 |
| Example 3 | 2001.4 | 91.2 |
| Example 4 | 1820.7 | 91 |
| Example 5 | 2033 | 91.4 |
| Example 6 | 2096.3 | 91.8 |
| Example 7 | 1695.4 | 90.2 |
| Example 8 | 1699 | 90.3 |
| Example 9 | 2071.3 | 91.7 |
| Example 10 | 1684.8 | 90.1 |
| Example 11 | 1577.8 | 91.9 |
| Example 12 | 1545.8 | 92 |
| Example 13 | 1641.7 | 90.1 |
| Example 14 | 2015.4 | 92.5 |
| Example 15 | 1449.9 | 90.0 |
| Example 16 | 2116.6 | 92.8 |
| Comparative example 1 | 2175 | 87.6 |
| Comparative example 2 | 2052.3 | 88.2 |
| Comparative example 3 | 2113.7 | 87.9 |
| Comparative example 4 | 1463.2 | 89.7 |
| Comparative example 5 | 1481.8 | 89.1 |
| Comparative example 6 | 2083 | 88 |
| Comparative example 7 | 2328.5 | 86.9 |
| Comparative example 8 | 2257.2 | 87.5 |

In the present application, coin-type batteries were further prepared using the anode materials of Examples 1-16 and Comparative Examples 1-8, respectively. Specifically, an anode slurry was prepared by mixing the anode material and graphite mixture, Super-P, KS-6, CMC, and SBR in a mass ratio of 92:2:2:2:2, which was then coated onto copper foil and dried to form an anode sheet. The ratio of the anode material to graphite in the anode material and graphite mixture was determined by their respective initial discharge specific capacities and the required capacity of the mixture. Coin-type batteries were assembled in an Ar-filled glove box using lithium metal foil as the counter electrode.

In the present application, the coin-type batteries obtained from Examples 1-16 and Comparative Examples 1-8 were subjected to charge-discharge cycling to test their capacity retention rate and electrode sheet thickness expansion rate. The test conditions included 50 repeated charge-discharge cycles at a current density of 1 C within a voltage range of 0.01 V-5 V. Referring to Table 6, compared with Comparative Examples 1-8, the coin-type batteries of Examples 1-16 exhibited a significantly lower electrode sheet thickness expansion rate and a significantly higher capacity retention rate after 50 charge-discharge cycles.

**Table 6. Charge-discharge cycling performance test results of coin-type batteries of Examples 1-16 and Comparative Examples 1-8 of the present application**

| | Electrode plate thickness after 50 cycles (%) | Capacity retention rate after 50 cycles (%) |
|---|---|---|
| Example 1 | 38.1 | 86.9 |
| Example 2 | 38.5 | 86.7 |
| Example 3 | 38.9 | 86.3 |
| Example 4 | 38.2 | 86.8 |
| Example 5 | 39 | 86 |
| Example 6 | 39.8 | 85.7 |
| Example 7 | 37.8 | 87.1 |
| Example 8 | 37.9 | 87 |
| Example 9 | 39.7 | 85.9 |
| Example 10 | 37.6 | 87.2 |
| Example 11 | 36.9 | 87.6 |
| Example 12 | 36.8 | 87.9 |
| Example 13 | 37.0 | 88.0 |
| Example 14 | 42.1 | 85.0 |
| Example 15 | 36.0 | 88.9 |
| Example 16 | 43.9 | 84.1 |
| Comparative example 1 | 45.1 | 79.8 |
| Comparative example 2 | 44.5 | 80.6 |
| Comparative example 3 | 44.6 | 80.1 |
| Comparative example 4 | 37.5 | 87.3 |
| Comparative example 5 | 37.1 | 87.9 |
| Comparative example 6 | 44.7 | 80.2 |
| Comparative example 7 | 45 | 79 |
| Comparative example 8 | 44.8 | 80 |

Please refer to Table 1-1 and Table 1-2. In Examples 1-16, through the preparation method of the anode material of the present application, the carbon matrix was treated with zinc salt under the action of organic surfactants such as PVA, PVP, and Pluronic F127, so that elemental zinc was fully attached to the surface and pores of the carbon matrix. After acid acid-washing, the zinc on the surface of the carbon matrix was removed while the zinc in the pores of the carbon matrix is retained. Under the catalytic activity of elemental zinc, the silicon material was deposited in the pores of the carbon matrix. According to the characterization method of the present application, the deposition parameter *γ* of the silicon material in the anode materials of Examples 1-16 was greater than 0.85, which can indicate that a relatively larger amount of silicon material was deposited in the pores of the carbon matrix, and a relatively smaller amount of silicon material was attached to the surface of the carbon matrix.

Please refer to Table 1-1, Table 1-2, and Table 5. The anode materials of Examples 1-16 had a smaller specific surface area, higher powder electrical conductivity, and appropriate carbon element content and silicon element content. For example, the specific surface area was controlled at 0.5 m²/g-10 m²/g, the powder electrical conductivity was controlled at 0.5 S/cm-2 S/cm, the carbon element content in the anode material was controlled at 40% to 62%, and the silicon element content was controlled at 37% to 55%.

The smaller specific surface area of the anode material indicates reduced lithium salt consumption by the SEI film, which is conducive to reducing the risk of electrical disconnection between particles caused by the volume effect. The higher powder electrical conductivity of the anode material indicates better electrical conductivity. The appropriate carbon element content of the anode material indicates that it has an effective conductive network, and the appropriate silicon element content indicates that it has sufficient energy storage capacity. The above aspects enable the anode materials of Examples 1-16 to have higher initial discharge specific capacity and initial coulombic efficiency (see Table 5).

Please refer to Table 1-1, Table 1-2, and Table 6. The anode materials of Examples 1-16 had a smaller specific pore volume, lower gas generation value, smaller micropore volume proportion, and larger mesopore volume proportion. For example, the specific pore volume was maintained in the range of 0.001 cm³/g-0.1 cm³/g, the 7-day average gas generation at room temperature was less than the value 1 mL/g, the proportion of micropores is maintained in the range of 0-10%, and the proportion of mesopores is maintained in the range of 80%-100%.

A smaller specific pore volume of the anode material indicates that the pores of the carbon matrix are effectively filled by the silicon material, and the pores in the anode material can reserve space for the volume expansion of the silicon material, thereby alleviating the expansion effect of the anode material and resulting in a relatively low degree of expansion for the anode materials of Examples 1-16 during charge-discharge cycles (see Table 6); meanwhile, the pores in the anode material can also adsorb or accommodate a small amount of gas generated by the side reaction between the silicon material and the electrolyte, thus improving the gas evolution phenomenon of the anode material, and the gas evolution of the anode material is significantly reduced.

A smaller volume proportion of micropores of the anode material indicates that the micropores, which account for more than 70% of the original carbon matrix, are effectively filled by the silicon material, which can reduce the active sites for side reactions between the anode material and the electrolyte, thereby reducing the thickening of the SEI film caused by the continuous intrusion of the electrolyte. A larger volume proportion of mesopores indicates that sufficient buffer space for volume expansion is reserved for the silicon material in the anode material, enabling the anode material to have a certain ability to alleviate the volume expansion of the silicon material, and reducing the risk of anode material cracking and pulverization caused by excessive local expansion stress resulting from uneven volume changes of silicon particles during charge-discharge cycles. The above smaller volume proportion of micropores or larger proportion of mesopores both enable the anode materials of Examples 1-16 to have high cycle stability (see Table 6).

Please refer to Table 2, Table 5, and Table 6. In Comparative Example 1, because the zinc on the surface of the carbon matrix was not acid-washed during its preparation process, the proportion of silicon particles deposited in the pores of the carbon matrix was relatively small, and relatively more silicon particles adhered to the surface of the carbon matrix, resulting in a larger specific pore volume, larger specific surface area, larger volume proportion of micropores, and smaller volume proportion of mesopores for the anode material, which led to increased gas evolution of the anode material. Even though it had a quite high initial discharge specific capacity due to more silicon material adhering to the surface, its initial coulombic efficiency was significantly lower, and it suffered from severe expansion and poor cycle stability during cycling. In Comparative Examples 2 and 3, the acid concentration and stirring time of acid-washing were lowered during their respective preparation processes; insufficient acid-washing resulted in incomplete removal of the zinc adhering to the surface of the carbon matrix, leading to results similar to Comparative Example 1, where Comparative Examples 2 and 3, despite having quite high initial discharge specific capacity due to more silicon material adhering to the surface, had significantly lower initial coulombic efficiency, severe expansion during cycling, and relatively poor cycle stability.

Please refer to Table 2, Table 5, and Table 6. In Comparative Examples 4 and 5, the acid concentration and stirring time for acid-washing were increased during preparation. Excessive acid-washing caused partial dissolution of the zinc within the pores of the carbon matrix, resulting in a decrease in the total amount of silicon material distributed within the obtained anode material. Excessive acid-washing also led to a lower amount of metallic zinc inside the carbon matrix, which is unfavorable for catalyzing the deposition of silicon material into the pores of the carbon matrix; its silicon material deposition parameter *γ* did not reach 0.85. Furthermore, although it exhibited some favorable physical properties or electrochemical cycling performance due to the relatively low silicon content, the insufficiency of the silicon material led to a significantly low initial discharge specific capacity. Considering all factors, the overall performance of this anode material is also suboptimal.

Please refer to Table 2, Table 5, and Table 6. In Comparative Examples 6 and 7, the organic surfactant was replaced during preparation; the replacement components, polyquaternium-16 and benzalkonium bromide, do not meet the requirements for the selection of the organic surfactant, while Comparative Example 8 excluded the original organic surfactant during its preparation. In the preparation of Comparative Examples 6-8, the adhesion or reduction of zinc on the surface and within the pores of the carbon matrix was affected, thereby impacting the subsequent deposition efficiency of the silicon material. Characterization showed that the silicon material deposition parameter *γ* of the anode materials in Comparative Examples 6-8 was low, and the silicon material could not be deposited in large quantities within the pores of the carbon matrix, resulting in a larger specific pore volume, larger specific surface area, higher volume proportion of micropores, and lower volume proportion of mesopores for the anode material. This led to increased gas evolution of the anode material, and even though it had a relatively high initial discharge specific capacity due to a certain amount of silicon material still adhering to the surface, its initial coulombic efficiency was significantly low, it expanded severely during cycling, and its cycle stability was poor.

In summary, the deposition parameter *γ* of the silicon material in the anode material of the present application is greater than or equal to 0.85, the average pore size is relatively large, and a relatively large amount of silicon material in the anode material is distributed within the pores of the carbon matrix. The anode material of the present application has a smaller specific surface area, higher powder electrical conductivity, and appropriate carbon element and silicon element contents, thereby possessing a higher initial discharge specific capacity and initial coulombic efficiency. The anode material of the present application also has a smaller specific pore volume, lower gas generation value, smaller volume proportion of the micropores, and larger volume proportion of the mesopores, thereby exhibiting good resistance to expansion and high cycle stability during charge-discharge cycles, which solves the problems of severe expansion and poor cycle stability in existing silicon-based anode lithium-ion batteries.

The present application further uses the anode materials of Examples 17-28 and Comparative Examples 9-15 to prepare button batteries, respectively, and conducts the following electrochemical performance tests:
1. Test method for reversible capacity and 7C capacity retention rate:
   1) Preparation of the battery: a prepared anode material, a conductive agent, and a binder were dissolved and mixed in a solvent at a mass percentage of 94:1:5, with the solid content controlled at 50%, and the mixture was coated onto a copper foil current collector, and vacuum-dried to obtain an anode sheet; then, a ternary cathode sheet prepared by a traditional mature process, 1mol/L LiPF6/ethyl cellulose + dimethyl carbonate + ethyl methyl carbonate (v/v=1:1:1) electrolyte, a polypropylene separator (Celgard2400), and a shell were assembled using conventional production processes to form an 18650 cylindrical unit battery.
   2) Testing: a charge-discharge test of the above battery was performed on a LAND battery test system from Wuhan Jinnuo Electronics Co., Ltd. at room temperature, with 0.2C constant current charge-discharge and charge-discharge voltage limited to 2.75-4.2V, to obtain an initial reversible capacity; then, 7C constant current charge-discharge was used, with the charge-discharge voltage limited to 2.75-4.2V, to obtain a reversible capacity, and the ratio of the two was calculated to obtain a 7C capacity retention rate.
2. Test method for initial coulombic efficiency (ICE):
   1) Preparation of button battery: An anode slurry was prepared according to a mass ratio of AN anode material, conductive carbon black, and polyacrylic acid (PAA) of 75:15:10, and the anode slurry was coated onto copper foil and dried to form an anode sheet; a button battery was assembled in a glove box filled with argon gas by using a lithium metal sheet as a counter electrode.
   2) Test: a charge and discharge test was performed on the button battery at a current density of 0.1C within a charge-discharge range of 0.01V-5V to obtain the initial coulombic efficiency (ICE) of the button battery.
3. Test method for electrode sheet thickness expansion rate after 50 cycles:
   1) Preparation of button battery: an anode slurry was prepared by mixing an anode active material, conductive carbon black (Super-P), conductive graphite (KS-6), carboxymethyl cellulose (CMC), and styrene-butadiene rubber (SBR) in a mass ratio of 92:2:2:2:2, and the anode slurry was coated onto copper foil and dried to form an anode sheet, where the anode active material was a mixture of the anode material of the present application and graphite, with the proportions of the anode material and graphite being determined by their respective initial discharge specific capacities and the required capacity of the mixture; the button battery was assembled in an argon-filled glove box using a lithium metal sheet as a counter electrode.
   2) Test: 50 repeated charge and discharge tests were performed on the button battery at a current density of 1C within a charge-discharge range of 0.01V-5V to obtain the electrode sheet thickness expansion rate of the battery after 50 cycles.

See Table 7 for test results:

**Table 7: Electrochemical performance characterization of anode materials in Examples 17-28 and Comparative Examples 9-15**

| Example | Initial discharge specific capacity (mAh/g) | Initial coulombic efficiency (%) | 7C capacity retention rate | Expansion rate |
|---|---|---|---|---|
| Example 17 | 1897 | 93.1 | 65% | 37% |
| Example 18 | 1655 | 91.5 | 69% | 36% |
| Example 19 | 1245 | 92 | 79% | 36.10% |
| Example 20 | 1921 | 92.5 | 54% | 38.60% |
| Example 21 | 1898 | 92.7 | 32% | 37.20% |
| Example 22 | 1856 | 92.5 | 69% | 35.80% |
| Example 23 | 745 | 88.9 | 82% | 34.80% |
| Example 24 | 1844 | 92.5 | 49% | 38.80% |
| Example 25 | 1805 | 92.9 | 74% | 35.50% |
| Example 26 | 1789.4 | 92.4 | 55% | 38.10% |
| Example 27 | 2289 | 93.3 | 46% | 38.20% |
| Example 28 | 2494 | 94.2 | 40% | 38.90% |
| Comparative example 9 | 1878 | 92.8 | 5% | 49.10% |
| Comparative example 10 | 1868 | 92.4 | 28% | 39.50% |
| Comparative example 11 | 1645 | 90.4 | 72% | 41.10% |
| Comparative example 12 | 1877 | 92.1 | 22% | 40.80% |
| Comparative example 13 | 701 | 80.6 | 93% | 35.10% |
| Comparative example 14 | 1901 | 92.2 | 22% | 40.90% |
| Comparative example 15 | 2302 | 93.1 | 2.50% | 69.40% |

Combined with Examples 17-28 and Tables 3 and 4, by using the preparation method of the anode material of the present application and limiting the mass addition of the activator to 0.2%-5% of the mass of the carbon-based raw material, a large number of uniformly distributed micropores can be formed in the porous carbon precursor, with the volume proportion of micropores being no less than 70%, which was conducive to the subsequent filling of the active material into the micropores. During the deposition process of the active material such as silicon material, by regulating the deposition conditions and limiting 0.1≤α≤50, the deposition parameter *γ* of the finally formed anode material was no less than 0.85, meaning a relatively large amount of active material was deposited inside the matrix, reducing the direct contact between the anode active material and the electrolyte during charging and discharging, and reducing the probability of hydrolysis of the active material such as silicon material in water to generate silicates, thereby effectively reducing the gas generation value of the anode material; meanwhile, the value of M was greater than 0.015 and less than 5, ensuring that a relatively large amount of silicon material was uniformly deposited within the carbon matrix, and the anode material has relatively high electrical conductivity. Importantly, the overall process did not introduce excessive metal impurities, so the formed anode material had high electrical conductivity, high charge-discharge efficiency, and good cycle stability.

Combined with Examples 17-28 and referring to Tables 3, 4, and 7, the volume proportion of the mesopores in the anode material was 30%-80%, and the volume proportion of the micropores was 10%-30%, indicating that the micropores in the anode material were basically filled with the active material such as silicon material. The resulting anode material had a higher deposition parameter, thereby constructing electron transport channels within the pores of the carbon matrix, which was conducive to improving the electrical conductivity of the anode material and further increasing the M value, thus resulting in higher cycle stability and initial coulombic efficiency for the formed battery.

Combined with Examples 17-28 and referring to Tables 3 and 7, when the specific pore volume of the anode material was 0.001-0.1 cm³/g, the expansion rate of the formed anode material was relatively low, all within 40%. This was because after the carbon matrix was filled with silicon material, the remaining pores in the carbon matrix could reserve space for the volume expansion of the silicon material, thereby alleviating the expansion effect of the anode material and improving the cycle stability of the anode material. The remaining pores in the carbon matrix could also adsorb or accommodate a small amount of gas generated by the side reaction between the silicon material and the electrolyte, thereby reducing the gas generation value of the anode material.

Combined with Examples 17-28 and referring to Table 3 and Table 7, when the average pore size of the anode material was within 0.45-50 nm, it could facilitate the transport channels for lithium ions, thereby improving the electrical conductivity and initial coulombic efficiency of the anode material.

Compared with Example 17, Comparative Example 9 did not add potassium ferrate, meaning the carbon-based raw material was not activated. Consequently, an appropriate number and uniform distribution of activation pores could not be formed inside the material obtained after carbonization. Active materials, such as silicon materials, were difficult to deposit within the pores of the carbon matrix and instead deposit on the surface of the carbon matrix, resulting in an anode material with large volume expansion and low electrical conductivity. Additionally, the silicon material deposited on the surface of the carbon matrix increased the contact area with the electrolyte, increased the thickness of the SEI film, lengthened the diffusion distance of lithium ions, and hindered the smooth intercalation and deintercalation of lithium ions, ultimately leading to a very low capacity retention rate of the anode material.

Compared with Example 17, the amount of potassium ferrate added in Comparative Example 10 was too low to form an appropriate number and uniform distribution of activation pores inside the material obtained after carbonization. Only a portion of the silicon material was deposited inside the carbon matrix, while more was deposited on the surface of the carbon matrix, causing the deposition coefficient *γ* and M values of the resulting anode material to be lower than the preset values. The electrical conductivity of the anode material was poor, and its electrochemical performance, especially the capacity retention rate, was far lower than that of Example 1.

Compared with Example 17, the amount of potassium ferrate added in Comparative Example 11 was too high. During the activation process, the pore size increased and the number of pores increased, which reduced the volume proportion of micropores in the carbon matrix and increased the size of the deposited silicon. Furthermore, the resulting anode material introduced more metal impurities, leading to structural collapse during the deintercalation process, which reduced the cycling performance of the anode material.

Compared with Example 17, Comparative Example 12 did not perform pretreatment on the carbon matrix, so the silicon material was partially deposited on the surface of the carbon matrix. The obtained M value was only 0.002, which was about 1/10 of the limit specified in the present application, and the deposition parameter *γ* was also lower than 0.85. The electrical conductivity of the resulting anode material was only 0.1 S/cm, which was far below the usage standard required by the present application.

Compared with Example 17, Comparative Example 13 reduced the silicon deposition time, resulting in a silicon mass percentage of only 15% in the obtained anode material. Although the M value, deposition coefficient *γ*, and electrical conductivity of the formed anode material were all within the set values, both the initial discharge specific capacity and initial coulombic efficiency of the anode material were relatively low.

Compared with Example 17, Comparative Example 14 changed the silicon material deposition conditions, specifically by changing the vacuum degree of the silicon material deposition, such that the silicon material deposition condition *α* was 52.5%, exceeding the preset range. This resulted in a larger specific pore volume of the anode material and more silicon material depositing on the surface of the carbon matrix, thereby causing a higher gas generation value for the formed anode material, and both the deposition coefficient *γ* and M values of the formed anode material were relatively low, leading to poor electrochemical performance of the resulting battery.

Compared with Example 17, Comparative Example 15 increased the silicon material deposition time, resulting in a silicon mass percentage exceeding 65%. However, some silicon overflowed and deposited on the surface of the matrix, making the silicon on the matrix surface prone to reacting with the electrolyte, which increased the gas generation value of the anode material. In addition, after the silicon material deposited on the surface of the carbon matrix, it continued to grow and enlarge, leading to particle pulverization and detachment, thereby reducing the electrochemical performance of the anode material. For example, the performance of the battery formed thereby, especially the 7C capacity retention rate, was very low, at only 2.5%, failing to meet the standards for excellent battery materials.

The above embodiments are merely used to illustrate the technical solutions of the present application and not to limit them. Although the present application has been described in detail with reference to the above preferred embodiments, those of ordinary skill in the art should understand that modifications or equivalent substitutions may be made to the technical solutions of the present application without departing from the spirit and scope of the technical solutions of the present application.

## Claims

1. An anode material, comprising a carbon matrix and an active material, wherein the carbon matrix is provided with pores, the active material is at least partially disposed within the pores of the carbon matrix, and a deposition parameter γ of the active material is greater than or equal to 0.85, wherein $γ = \frac{{m}_{2} \times {p}_{2} - {m}_{1} \times {p}_{1}}{\left({m}_{1}\times {a}_{1}-{m}_{2}\times {a}_{2}\right) / ρ} ;$ where *m*₁ is a mass of the anode material, *a*₁ is a mass percentage of the active material based on *m*₁, and *p*₁ is a specific pore volume of the anode material; *m*₂ is a mass of the anode material after removal of the active material, *a*₂ is a mass percentage of the active material based on *m*₂, *p*₂ is a specific pore volume of the anode material after the removal of the active material; and *ρ* is a density of the active material.

2. The anode material according to claim 1, wherein based on the mass of the anode material, the mass percentage of the active material in the anode material is a1, wherein 16%≤a1≤65%; and
an electrical conductivity of the anode material is σ S/cm, M=σ/100×a1, wherein 0.015≤M≤5.

3. The anode material according to claim 2, wherein the anode material satisfies at least one of:
(1) the anode material has a median particle size D50 of 1 µm to 15 µm;
(2) a particle size distribution of the anode material satisfies 0.1≤(D90-D10)/D50≤2;
(3) the anode material has a specific pore volume of 0.001 to 0.1 cm³/g;
(4) the anode material has an average pore size of 0.45 nm to 50 nm; or
(5) the anode material has a specific surface area of 0.1 m²/g to 5 m²/g.

4. The anode material according to claim 2 or 3, wherein the anode material satisfies at least one of:
(1) a volume proportion of micropores in the anode material is 10% to 30%, and a pore size of the micropores is less than or equal to 2 nm;
(2) a volume proportion of mesopores in the anode material is 30% to 80%, and a pore size of the mesopores is greater than 2 nm and less than or equal to 50 nm; or
(3) a volume proportion of macropores in the anode material is 0 to 10%, and a pore size of the macropores is greater than 50 nm.

5. The anode material according to claim 1, wherein the anode material satisfies at least one of:
(1) the anode material has a specific pore volume of 0.001 cm³/g to 0.1 cm³/g;
(2) the anode material has an average pore size of 0.45 nm to 50 nm;
(3) the pores of the anode material comprises micropores, a volume proportion of the micropores in the pores is less than or equal to 10%, and a pore size of the micropores is less than or equal to 2 nm;
(4) the anode material comprises mesopores, a volume proportion of the mesopores in the pores is greater than or equal to 80%, and a pore size of the mesopores is greater than 2 nm and less than or equal to 50 nm; or
(5) the anode material comprises macropores, a volume proportion of the macropores in the pores is less than or equal to 20%, and a pore size of the macropores is greater than 50 nm.

6. The anode material according to claim 1, wherein the anode material satisfies at least one of:
(1) the anode material has a specific surface area of 0.5 m²/g to 10 m²/g;
(2) the anode material has a particle size D50 of 5 µm to 20 µm;
(3) a particle size distribution (D90-D10)/D50 of the anode material is 0.9 to 5;
(4) a compaction density of the anode material under 1 T pressure is 0.8 g/cm³ to 1.3 g/cm³; or
(5) a tap density of the anode material after 3000 times of vibrations is 0.5 g/cm³ to 1.5 g/cm³.

7. The anode material according to claim 1 or 2, wherein the active material comprises at least one of a silicon-based material, a tin-based material, a germanium-based material, and a lead-based material.

8. The anode material according to claim 1 or 2, comprising at least one of:
(1) the active material comprises a silicon-based material, the silicon-based material comprises one or more of amorphous silicon, crystalline silicon, a composite of crystalline silicon and amorphous silicon, silicon oxide and silicon alloy, and the silicon-based material has an average particle size of 0.1 nm to 50 nm;
(2) the active material comprises a silicon material, and the silicon material comprises at least one of crystalline silicon, silicon oxide, amorphous silicon, silicon alloy, and a mixture of crystalline and amorphous silicon; or
(3) the active material comprises a silicon material, and the silicon material comprises at least one of crystalline silicon, silicon oxide, amorphous silicon, silicon alloy, and a mixture of crystalline and amorphous silicon; and the silicon material has an average particle size of 1 nm to 500 nm.

9. The anode material according to claim 8, wherein the silicon material has a purity of greater than 99%.

10. The anode material according to claim 1 or 2, wherein the anode material satisfies at least one of:
(1) a powder electrical conductivity of the anode material under 20 kN pressure is 0.5 S/cm-2 S/cm;
(2) a 7-day average gas evolution of the anode material at 25 °C temperature is less than or equal to 1 mL/g;
(3) based on the mass of the anode material, a mass percentage of carbon element in the anode material is 40% to 60%; or
(4) based on the mass of the anode material, a mass percentage of silicon element in the anode material is 37% to 55%.

11. The anode material according to claim 1 or 2, wherein the anode material satisfies at least one of:
(1) the carbon matrix comprises one or more of artificial graphite, natural graphite, amorphous carbon, activated carbon, mesocarbon microbeads, carbon nanotubes, carbon nanofibers, and graphene;
(2) carbon matrix comprises micropores, a volume proportion of the micropores in the pores of the carbon matrix is greater than or equal to 70%, and a pore size of the micropores is less than 2 nm;
(3) based on a mass of the carbon matrix, the carbon matrix has a specific pore volume of 0.3 cm³/g to 2 cm³/g, or the carbon matrix has a pore volume of ≥0.4 cm³/g;
(4) the carbon matrix comprises at least one of hard carbon, soft carbon, graphite, mesocarbon microbeads, activated carbon, carbon aerogel;
(5) the carbon matrix has an average pore size of is 0.1 nm to 5 nm; or
(6) based on the mass of the anode material, a mass percentage of carbon element is 30% to 75%.

12. The anode material according to claim 1 or 2, wherein the anode material further comprises a coating layer disposed on at least part of a surface of the carbon matrix, and the coating layer satisfies at least one of:
(1) the coating layer comprises at least one of a carbon material, metal oxide, conductive polymer, fluoride, phosphate, and nitride, and the carbon material comprises one or more of graphene, soft carbon, and hard carbon;
(2) the coating layer has a thickness of 1 nm to 300 nm; or
(3) a mass percentage of the coating layer in the anode material is less than or equal to 10%.

13. The anode material according to claim 1, wherein the active material comprises a silicon-based material, and the silicon-based material is prepared by chemical vapor deposition, the chemical vapor deposition satisfying: $α = \left(N\times {V}^{2}\right) / p ,$
wherein 0.1 ≤ α ≤ 50;
N is a volume concentration of a silicon-containing gas, in %;
V is a total gas flow rate, in L/min; and
p is a deposition pressure, in Pa.

14. An anode sheet, comprising the anode material according to any one of claims 1 to 13.

15. A secondary battery, comprising the anode material according to any one of claims 1 to 13 or the anode sheet according to claim 14.
